# EUROPEAN PATENT SPECIFICATION

(11) **EP 3 128 774 B1**
(45) Date of publication and mention of the grant of the patent: **05.06.2019**
(21) Application number: 16163622.0
(22) Date of filing: 04.04.2016
(51) Int. Cl.: H04W 8/18, H04W 12/08, H04L 29/06, H04W 48/02

(54) **METHODS, DEVICES AND SYSTEM FOR ACCESSING NETWORK**
VERFAHREN, VORRICHTUNGEN UND SYSTEM ZUM ZUGRIFF AUF EIN NETZWERK
PROCÉDÉS, DISPOSITIFS ET SYSTÈME POUR ACCÉDER À UN RÉSEAU

(30) Priority: 31.07.2015 CN 201510463356
(43) Date of publication of application: 08.02.2017
(73) Proprietor: Xiaomi Inc., Beijing 100085 (CN)
(72) Inventor: JIA, Weiguang, Beijing 100085 (CN); FU, Qiang, Beijing 100085 (CN); HOU, Enxing, Beijing 100085 (CN)
(74) Representative: Delumeau, François Guy

(56) References cited:
- EP-A1- 2 273 823
- EP-A1- 2 661 112
- US-A1- 2014 304 788
- ZIGBEE ALLIANCE: "ZigBee 5 Document 095023r34 - 6 ZigBee IP Specification", 20140301, 1 March 2014 (2014-03-01), page 85pp, XP009190484,

## Description

### TECHNICAL FIELD

The present disclosure generally relates to the field of computer technology, and more particularly, to methods, devices and systems for accessing a network.

### BACKGROUND

Zigbee is a kind of two-way short distance wireless communication technology with a low power consumption, a low rate and a low cost, mainly used for data transmission between electronic devices in a short distance, with low power consumption and a low transmission rate. A Zigbee device (i.e. a device which implements Zigbee functions, such as a body sensor, an infrared sensor, etc.) is typically required to connect to a network via a Zigbee gateway to communicate with other devices in the network. The Zigbee gateway is normally in a device access forbidding state. However, the Zigbee gateway can be bound with a terminal and can be switched to a device access permitting state based on an instruction which is sent by the bound terminal to maintain the Zigbee gateway in the device access permitting state within a preset time period.

In the related art, after it is powered on, a Zigbee device which is not in a network (hereinafter referred to as "Zigbee device") may broadcast to a surrounding Zigbee gateway which is already in the network (hereinafter referred to as "Zigbee gateway") a beacon request message containing its Media Access Control (MAC) address. After it receives the beacon request, if it is currently in a device access permitting state, the Zigbee gateway will send to the Zigbee device a response message to permit the Zigbee device to access the network, and connect the Zigbee device to the network based on the MAC address of the Zigbee device; if it is currently in a device access forbidding state, the Zigbee gateway will send to the Zigbee device a response message to forbid the Zigbee device to access the network. In addition, the Zigbee gateway will send a prompt message to a terminal (e.g. a mobile phone) which is bound with the Zigbee gateway, notifying the user of a Zigbee device being currently not in the network. Then, the user can operate the terminal bound with the Zigbee gateway according to the prompt, to cause the terminal bound with the Zigbee gateway to send an instruction for permitting the Zigbee device to access the network to the Zigbee gateway. The Zigbee gateway switches itself to a device access permitting state based on the instruction for permitting the Zigbee device to access the network which is sent by the terminal bound with the Zigbee gateway, such that the Zigbee device can access the network.

As can be seen above, the solution of the related art is complicated and not satisfying.

Document EP 2 661 112 A1 discloses solutions of automated device registration and device migration in an autonomous routing network.

Document US 2014/0304788 A1 discloses a method that includes identifying, at a security device of a secured wireless network, a wireless-enabled device that is not authorized to access the secured wireless network.

### SUMMARY

In order to achieve an advantageous effect of simplifying the network access process, embodiments of the present disclosure provide methods, devices and systems for accessing a network. The technical solutions are as follows.

According to a first aspect of embodiments of the present disclosure, there is provided a method for accessing a network, which is implemented by a network access device, the method comprises steps of:
receiving a request message requesting for accessing the network which is broadcast by a first communication device, wherein the request message contains a device identification of the first communication device;
detecting a current state of the network access device;
if the network access device is currently in a device access forbidding state, sending a state switching request to a terminal for which a binding relationship is established with the network access device in advance, wherein the state switching request contains the device identification of the first communication device ;
receiving a reply message sent by the terminal, the reply message being generated based on the state switching request by the terminal; and
if the reply message instructs switching the state of the network access device to a device access permitting state, switching the state of the network access device to a device access permitting state.

According to the invention, the step of sending a state switching request to a terminal for which a binding relationship is established with the network access device in advance comprises steps of:
generating a device identification list, the device identification list recording a device identification of each communication device which sends a request message during a preset time period since a moment when the request message sent by the first communication device is received by the network access device; and
sending to the terminal for which a binding relationship is established with the network access device in advance the state switching request containing the device identification list.
According to the invention, the reply message contains a target device identification, the target device identification being a device identification selected from the device identification list by a user of the terminal, and in a particular embodiment the method further comprises steps of:
   connecting a communication device corresponding to the target device identification to the network; and
   sending a response message to the communication device corresponding to the target device identification, the response message indicating that the communication device corresponding to the target device identification has been properly connected to the network.

In a particular embodiment, the method further comprises steps of:
if the network access device is currently in a device access permitting state, judging whether the first communication device is a device permitted by the network access device to access the network;
if the first communication device is judged to be a device permitted by the network access device to access the network, connecting the first communication device to the network; and
sending a response message to the first communication device, the response message indicating that the first communication device has been properly connected to the network.

In a particular embodiment, the request message contains a type identification of the first communication device;
the step of judging whether the first communication device is a device permitted by the network access device to access the network comprises steps of: judging whether the type of the first communication device is a type permitted by the network access device to access the network based on the type identification of the first communication device; and
if the type of the first communication device is judged to be a type permitted by the network access device to access the network, determining that the first communication device is a device permitted by the network access device to access the network.

In a particular embodiment, the request message contains an address of the first communication device;
the step of judging whether the first communication device is a device permitted by the network access device to access the network comprises steps of: judging whether the address of the first communication device belongs to a range of addresses permitted by the network access device to access the network; and
if the address of the first communication device is judged to belong to the range of addresses permitted by the network access device to access the network, determining that the first communication device is a device permitted by the network access device to access the network.

In a particular embodiment, the step of switching the state of the network access device to a device access permitting state comprises steps of:
switching the state of the network access device to a device access permitting state, and maintaining the network access device in the device access permitting state during a preset time window.

According to a second aspect of embodiments of the present disclosure, there is provided a method for accessing a network, which is implemented by a terminal, the method comprises steps of:
receiving a state switching request sent by a network access device for which a binding relationship is established with the terminal in advance, wherein the state switching request contains a device identification of the first communication device;
generating a reply message based on the state switching request; and
sending the reply message to the network access device, the reply message instructing if the network access device is to switch the state of the network access device to a device access permitting state.

According to the invention, the step of receiving a state switching request sent by a network access device for which a binding relationship is established with the terminal in advance comprises a step of:
receiving a state switching request sent by the network access device for which a binding relationship is established with the terminal in advance, the state switching request containing a device identification list, and the device identification list recording a device identification of each communication device which sends a request message requesting for accessing the network to the network access device during a preset time period since a moment when the request message sent by the first communication device is received by the network access device, and the reply message contains a target device identification, the target device identification being a device identification selected from the device identification list by a user of the terminal.

In a particular embodiment, the step of generating a reply message based on the state switching request comprises steps of:
displaying the device identification list based on the state switching request;
receiving a trigger instruction generated by a user triggering a target device identification, the target device identification being a device identification selected from the device identification list by the user; and
generating the reply message containing the target device identification based on the trigger instruction.

According to a third aspect of embodiments of the present disclosure, there is provided a method for accessing a network, the method comprising the steps of the method in accordance with the first aspect of the invention and a step of: broadcasting by a communication device a request message requesting for accessing the network to a network access device, the steps of the above method implemented by the network access device, wherein the network access device receives the request message broadcast by the communication device.

In an example, the request message contains a device identification of the communication device, and the request message further contains at least one of a type identification of the communication device and an address of the communication device.

According to a fourth aspect of embodiments of the present disclosure, there is provided a network access device, comprising:
a first receiving module configured to receive a request message requesting for accessing the network which is broadcast by a first communication device, wherein the request message contains a device identification of the first communication device;
a detecting module configured to detect a current state of the network access device;
a first sending module configured to, if the network access device is currently in a device access forbidding state, send a state switching request to a terminal for which a binding relationship is established with the network access device in advance, wherein the state switching request contains the device identification of the first communication device;
a second sending module configured to receive the reply message sent by the terminal, the reply message being generated based on the state switching request by the terminal; and
a switching module configured to, if the reply message instructs switching the state of the network access device to a device access permitting state, switch the state of the network access device to a device access permitting state.

According to the invention, the first sending module is configured to generate a device identification list, the device identification list recording a device identification of each communication device which sends a request message during a preset time period since a moment when the request message sent by the first communication device is received by the network access device; and send to the terminal for which a binding relationship is established with the network access device in advance the state switching request containing the device identification list.

According to the invention, the reply message contains a target device identification, the target device identification being a device identification selected from the device identification list by a user of the terminal, and in a particular embodiment the network access device further comprises:
a first connecting module configured to connect a communication device corresponding to the target device identification to the network;
a second sending module configured to send a response message to the communication device corresponding to the target device identification, the response message indicating that the communication device corresponding to the target device identification has been properly connected to the network.

In a particular embodiment, the network access device further comprises:
a judging module configured to, if the network access device is currently in a device access permitting state, judge whether the first communication device is a device permitted by the network access device to access the network;
a second connecting module configured to, if the first communication device is judged to be a device permitted by the network access device to access the network, connect the first communication device to the network; and
a third sending module configured to send a response message to the first communication device, the response message indicating that the first communication device has been properly connected to the network.

In a particular embodiment, the request message contains a type identification of the first communication device;
the judging module is configured to: judge whether the type of the first communication device is judged to be a type permitted by the network access device to access the network based on the type identification of the first communication device; and
if the type of the first communication device is a type permitted by the network access device to access the network, determine that the first communication device is a device permitted by the network access device to access the network.

In a particular embodiment, the request message contains an address of the first communication device;
the judging module is configured to: judge whether the address of the first communication device is judged to be belong to a range of addresses permitted by the network access device to access the network; and
if the address of the first communication device belongs to the range of addresses permitted by the network access device to access the network, determine that the first communication device is a device permitted by the network access device to access the network.

In a particular embodiment, the switching module is configured to switch the state of the network access device to a device access permitting state, and maintain the network access device in the device access permitting state during a preset time window.

According to a fifth aspect of embodiments of the present disclosure, there is provided a terminal comprising:
a receiving module configured to receive a state switching request sent by a network access device for which a binding relationship is established with the terminal in advance, wherein the state switching request contains a device identification of the first communication device;
a generating module configured to generate a reply message based on the state switching request; and
a sending module configured to send the reply message to the network access device, the reply message instructing if the network access device is to switch the state of the network access device to a device access permitting state.

According to the invention, the state switching request contains a device identification of the first communication device;
the receiving module is configured to receive a state switching request sent by the network access device for which a binding relationship is established with the terminal in advance, the state switching request containing a device identification list, and the device identification list recording a device identification of each communication device which sends a request message requesting for accessing the network to the network access device during a preset time period since a moment when the request message sent by the first communication device is received by the network access device, and the reply message contains a target device identification, the target device identification being a device identification selected from the device identification list by a user of the terminal.

In a particular embodiment, the generating module is configured to display the device identification list based on the state switching request; receive a trigger instruction generated by a user triggering a target device identification, the target device identification being a device identification selected from the device identification list by the user; and generate the reply message containing the target device identification based on the trigger instruction.

According to an example of the present disclosure, there is provided a communication device comprising:
a broadcasting module configured to broadcast a request message requesting for accessing the network to a network access device, the network access device being configured to detect a current state of the network access device, and if the network access device is currently in a device access forbidding state, send a state switching request to a terminal bound with the network access device.

In an example, the request message contains a device identification of the communication device, and the request message further contains at least one of a type identification of the communication device and an address of the communication device.

According to a sixth aspect of embodiments of the present disclosure, there is provided a system for accessing a network, comprising: a network access device and a communication device comprising a broadcasting module configured to broadcast a request message requesting for accessing the network to the network access device, wherein the network access device receives the request message broadcast by the communication device which is the first communication device,

Wherein the network access device is according to the fourth aspect of the embodiments or any one of the optional solutions of the fourth aspect.

In a particular embodiment, the system further comprises a terminal according to the fifth aspect or any one of the optional solutions of the fifth aspect.

The advantages and features of the network access device, the terminal, and the system according to the embodiments of the present disclosure are the same with those of the above described methods and will not be repeated here,

Alternatively, the steps of the method implemented by the network access device, and the method implemented by the terminal are determined by computer program instructions.

Consequently, according to an seventh aspect, the invention is also directed to a computer program for executing the steps of the method implemented by the network access device, the method implemented by the terminal as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The advantageous effects brought by the technical solutions according to the embodiments of the present disclosure may include:
in the methods, devices and systems for accessing a network provided by the embodiment of the present disclosure, the network access device receives a request message which is broadcast by a first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

It is to be understood that both the foregoing general description and the following detailed description are exemplary and explanatory only and are not restrictive of the invention, as claimed.

### BRIEF DESCRIPTION OF THE DRAWINGS

In order to clearly explain the embodiments of the present disclosure, hereinafter, a brief description of the drawings referred in the depiction of the embodiments will be given. It is apparent that the following drawings only illustrate some of the embodiments of the present disclosure, and one skilled in the art could obtain other drawings based on these drawings without paying creative labor.
Fig. 1 is a schematic view of an implementation environment involved in methods for accessing a network provided by embodiments of the present disclosure;
Fig. 2 is a flow chart of a method for accessing a network according to an exemplary embodiment;
Fig. 3 is a flow chart of a method for accessing a network according to another exemplary embodiment;
Fig. 4 is a flow chart of a method for accessing a network according to an example;
Fig. 5-1 is a flow chart of a method for accessing a network according to further still another exemplary embodiment;
Fig. 5-2 is a flow chart of a method for a network access device sending a state switching request to a terminal according to the embodiment as shown in Fig. 5-1;
Fig. 5-3 is a flow chart of a method for a terminal receiving a state switching request sent by a network access device according to the embodiment as shown in Fig. 5-1;
Fig. 5-4 is a flow chart of a method for a terminal generating a reply message based on a state switching request according to the embodiment as shown in Fig. 5-1;
Fig. 5-5 is schematic view of a display interface of a terminal according to the embodiment as shown in Fig. 5-1;

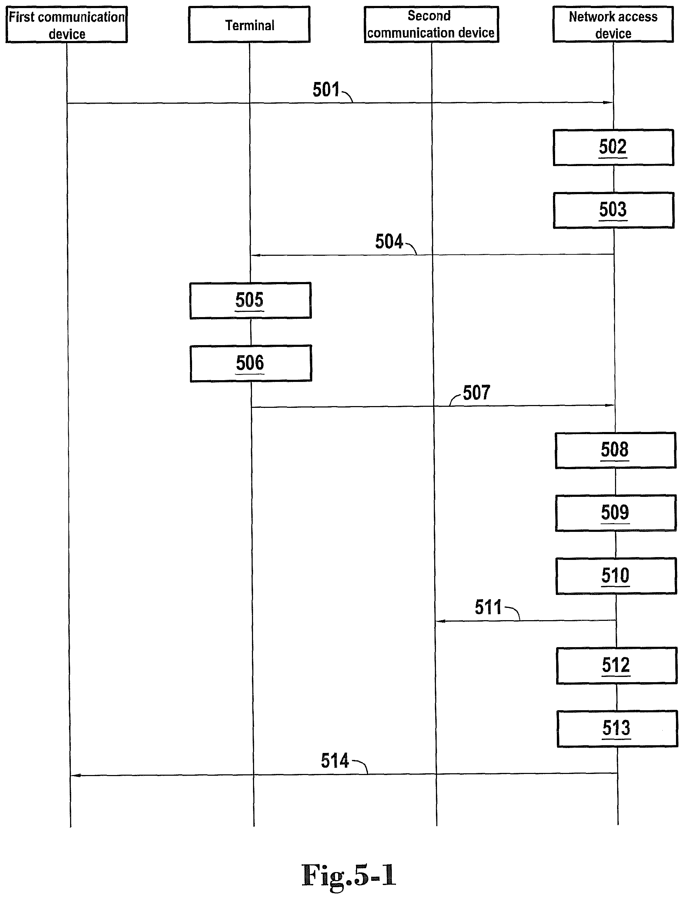

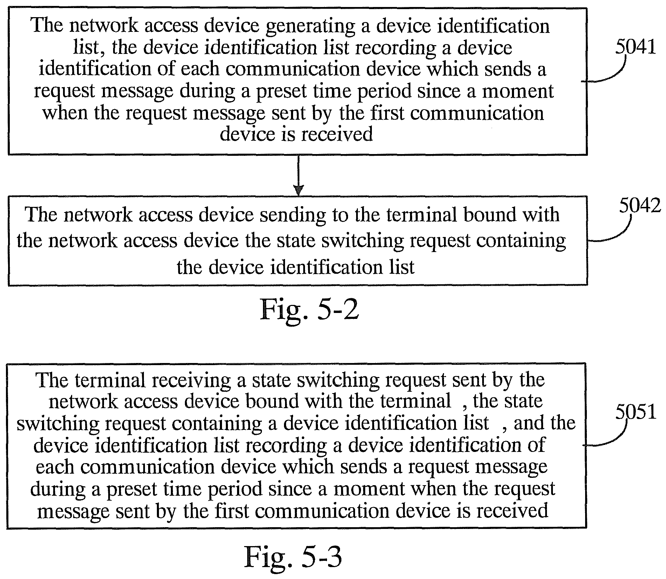

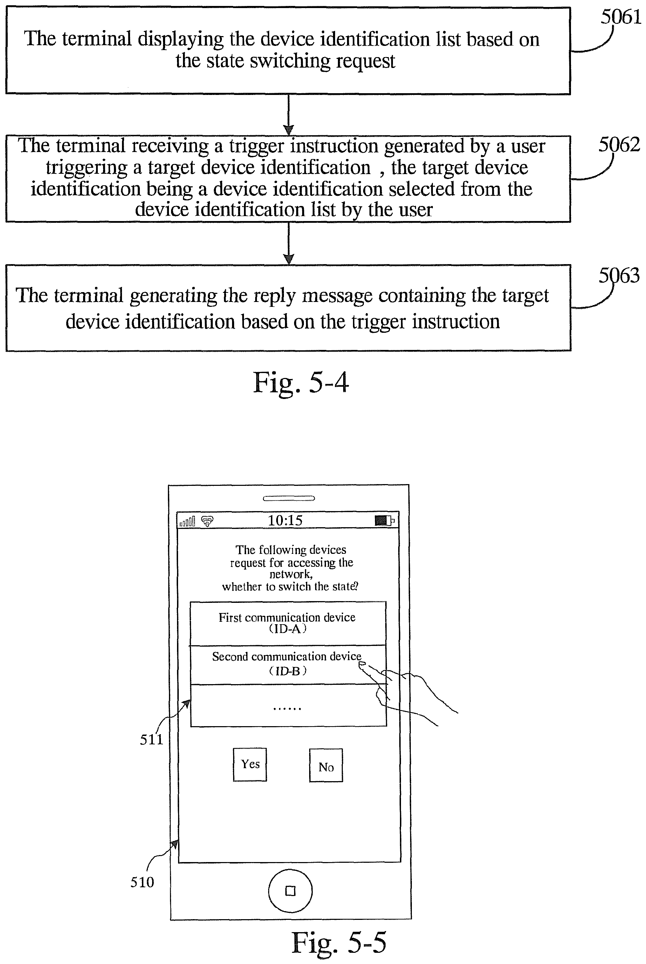

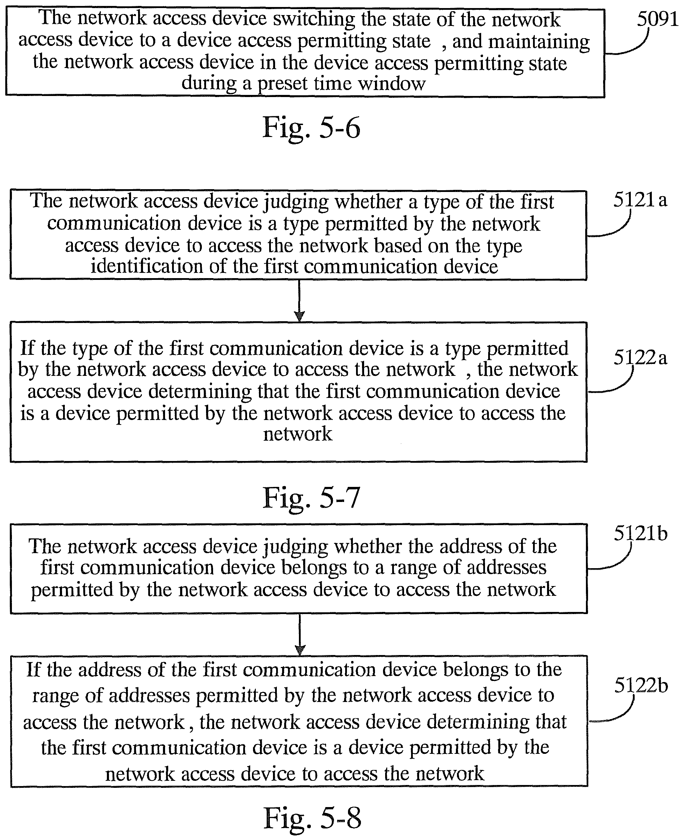

Fig. 5-6 is a flow chart of a method for a network access device switching itself to a device access permitting state according to the embodiment as shown in Fig. 5-1;
Fig. 5-7 is a flow chart of a method for a network access device judging whether a first communication device is a device permitted by the network access device to access the network;
Fig. 5-8 is a flow chart of another method for a network access device judging whether a first communication device is a device permitted by the network access device to access the network;

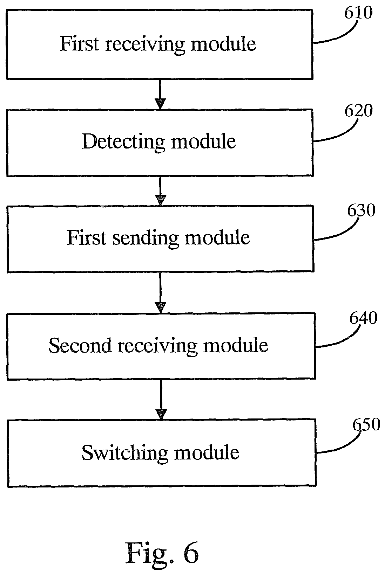

Fig. 6 is a block diagram of a device for accessing a network according to an exemplary embodiment;

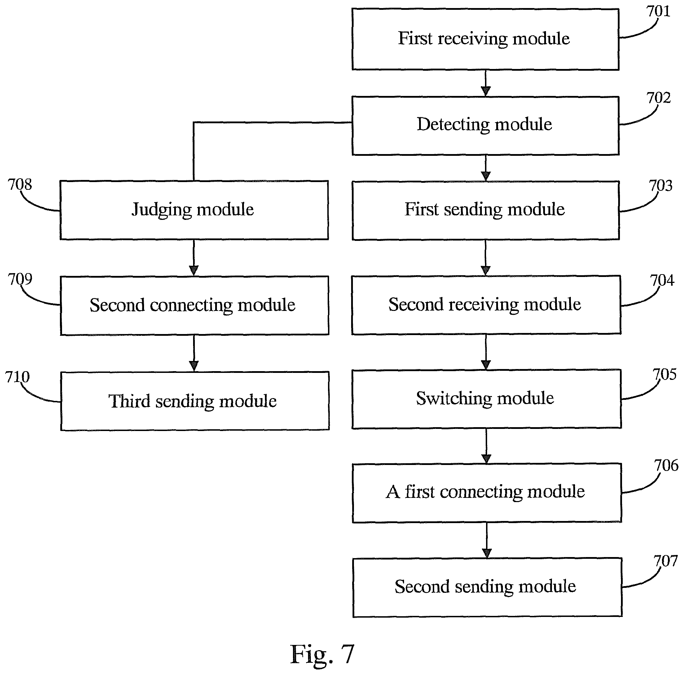

Fig. 7 is a block diagram of a device for accessing a network according to another exemplary embodiment;

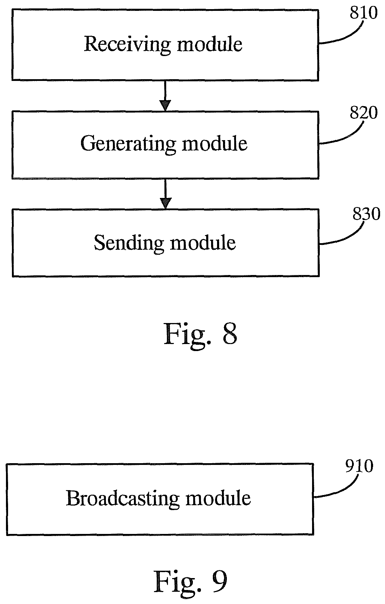

Fig. 8 is a block diagram of a device for accessing a network according to still another exemplary embodiment;
Fig. 9 is a block diagram of a device for accessing a network according to further still another exemplary embodiment;

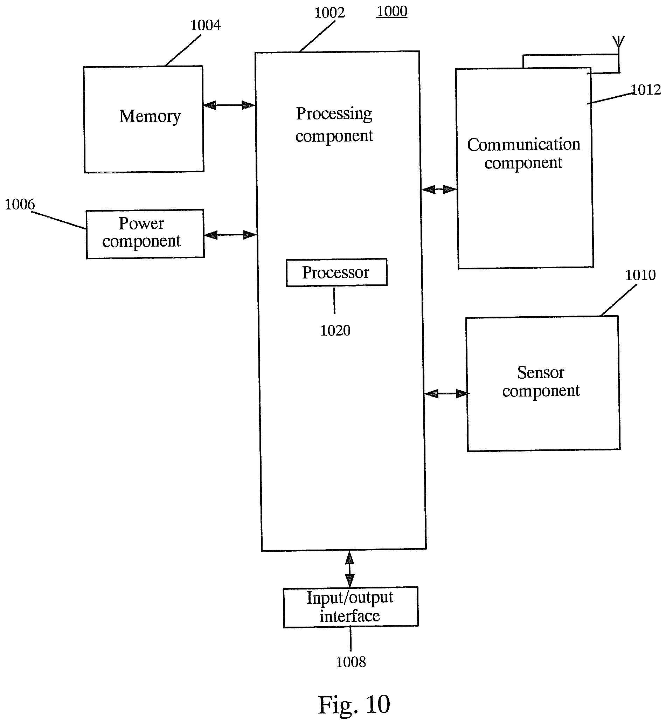

Fig. 10 is a block diagram of a device for accessing a network according to an exemplary embodiment;

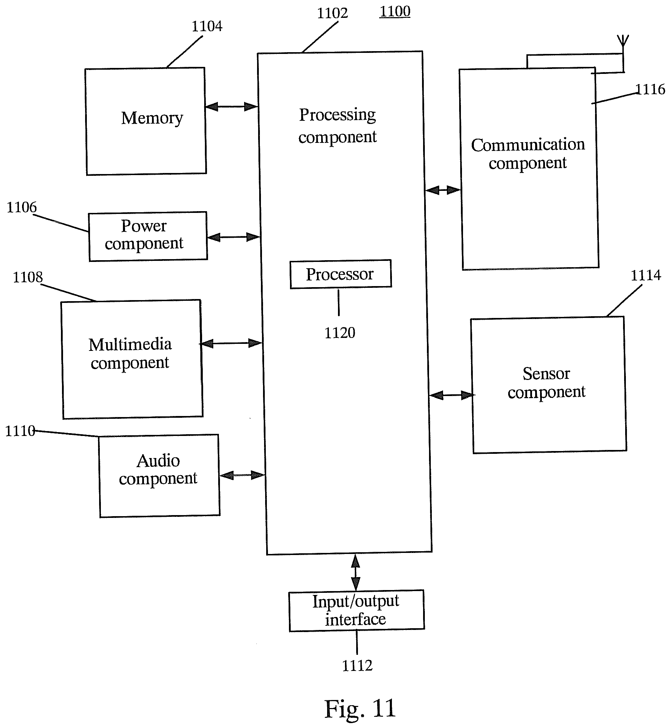

Fig. 11 is a block diagram of a device for accessing a network according to another exemplary embodiment;

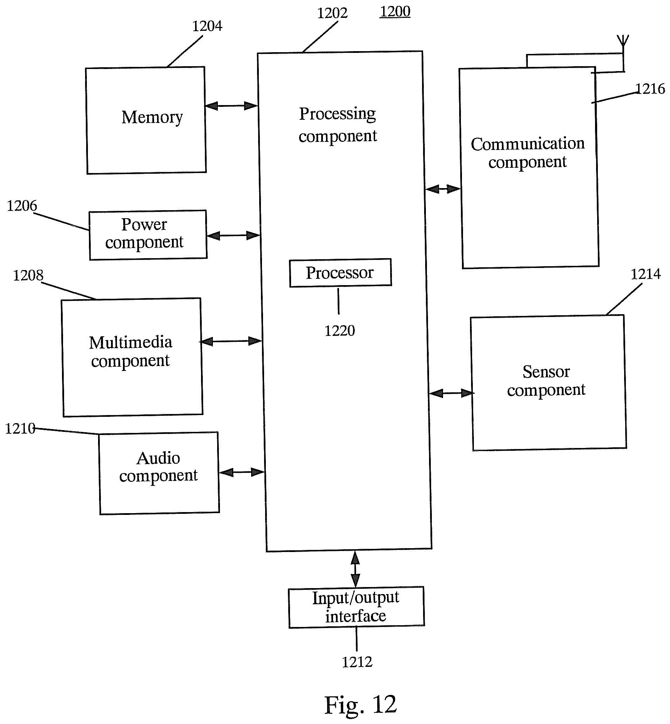

Fig. 12 is a block diagram of a device for accessing a network according to an example; and

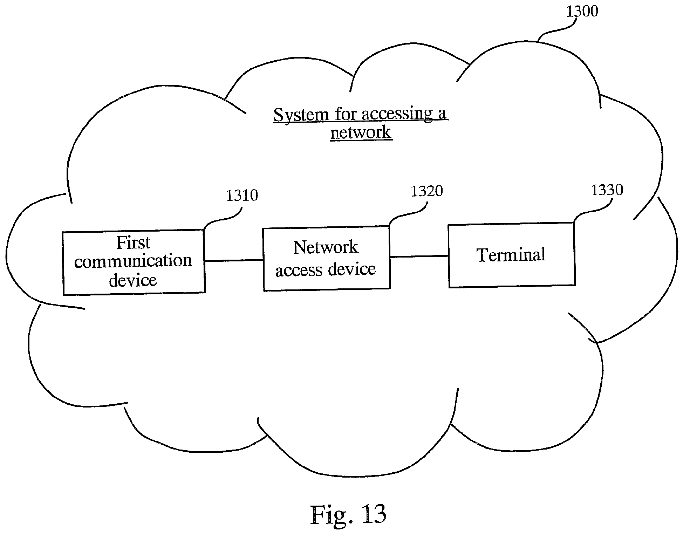

Fig. 13 is a schematic diagram of a system for accessing a network according to an exemplary embodiment.

The accompanying drawings, which are incorporated in and constitute a part of this specification, illustrate embodiments consistent with the invention and, together with the description, serve to explain the principles of the invention.

### DETAILED DESCRIPTION

In order to make objectives, technical solutions and advantages of the present disclosure more clear, detailed description will be given to the present disclosure with reference to the accompanying drawings. Apparently, the illustrated embodiments are not all of the embodiments of the present disclosure, but only a part of them. According to the embodiments of the present disclosure, all of the other embodiments obtained by those skilled in the art without consuming any creative work fall within the protection scope of the present disclosure.

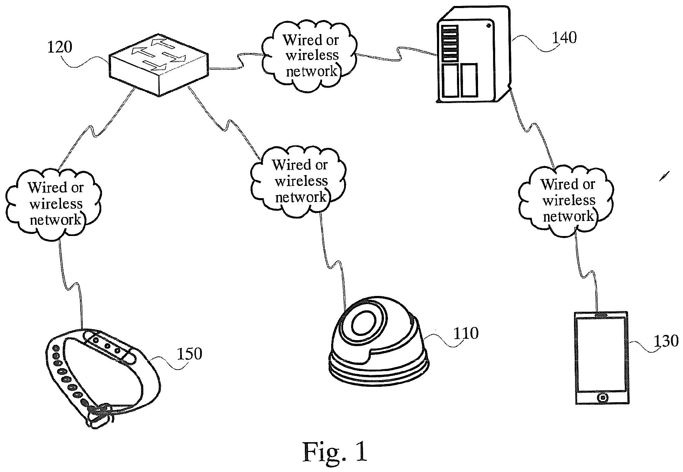

Fig. 1 is a schematic view of an implementation environment involved in methods for accessing a network provided by embodiments of the present disclosure. Referring to Fig. 1, the implementation environment includes a first communication device 110, a network access device 120 and a terminal 130. Optionally, the implementation environment may also include a server 140 and a second communication device 150.

As shown in Fig. 1, the first communication device 110 and the network access device 120, the network access device 120 and the server 140, the server 140 and the terminal 130, and the second communication device 150 and the network access device 120 may connect to each other through a wired network or a wireless network. This is not limited by the present implementation environment. Generally, the network access device 120 may also be directly connected to the terminal 130 through a wired network or a wireless network. It should be noted that, the above connections may be same or may be different. This is not limited by the present implementation environment. As an example, the first communication device 110 and the network access device 120 may be connected through a wired network, and the network access device 120 and the terminal 130 may be connected through a wireless network. Wherein, the wireless network may include but not limited to Bluetooth, infrared, Wireless-Fidelity (WIFI), data and Zigbee network.

The first communication device 110 is a device requesting for accessing the network. For example, the first communication device may be a device such as a smart camera, a smart socket, a smart bracelet, a smart TV, an infrared remote control and the like. As shown in Fig. 1, in the present implementation environment, the first communication device 110 is a smart camera, for example. The first communication device 110 may broadcast a request message to the network access device 120 requesting for accessing the network, and the request message may contain a device identification of the first communication device 110.

Optionally, the request message may also contain a type identification or an address of the first communication device 110. Wherein, the address may be a MAC address of the first communication device 110. The request message broadcast by the first communication device 110 to the network access device 120 may be a beacon request message, which is not limited by the present implementation environment. Wherein, the first communication device 110 may broadcast a request message to the network access device 120 when it is powered on, self-detects that it is not connected in a network and has no information for accessing a network saved.

The network access device 120 is a device capable of providing a service of connecting a communication device to a network. For example, the network access device 120 may be a device such as a gateway, a router and the like. Wherein, the network access device 120 can receive a request message requesting for accessing the network broadcast by the first communication device 110. Then the network access device 120 detects its current state. When currently in a device access forbidding state, the network access device 120 may send a state switching request to a terminal (the terminal 130 in the implementation environment as shown in Fig. 1) bound with the network access device 120. The network access device 120 receives a reply message sent by the terminal 130. If the reply message instructs the network access device 120 to switch the state to a device access permitting state, the network access device 120 switches its state to a device access permitting state, and maintains in the device access permitting state within a preset time period. Afterwards, if the first communication device 110 broadcasts later a request message to the network access device 120 within the preset time period, the network access device 120 may connect the first communication device 110 to the network.

If the request message broadcast by the first communication device 110 contains the device identification of the first communication device 110, the state switching request sent to the terminal 30 by the network access device 120 may accordingly contain the device identification of the first communication device 110. The network access device 120 may send a state switching request to the terminal 130 immediately upon receiving the request message broadcast by the first communication device 110. In another embodiment, the network access device 120 may send a state switching request to the terminal 130 after a preset time period has elapsed since it receives the request message broadcast by the first communication device 110. If the network access device 120 sends a state switching request to the terminal 130 after a preset time period has elapsed since it receives the request message broadcast by the first communication device 110, the network access device 120 may send to the terminal 130 a state switching request containing a device identification list, the device identification list recording, for at least one communication device, a device identification of each communication device which sends a request message (for example, a request message may contain a device identification of the second communication device 150) during a preset time period since a moment when the request message sent by the first communication device 110 is received, such that the user of the terminal 130 can select a device from the list to permit it to access the network. Based on a target device identification contained in the reply message sent by the terminal 130, the network access device 120 may connect a communication device corresponding to the target device identification to the network, and send to the communication device corresponding to the target device identification a response message indicating that the communication device corresponding to the target device identification has been properly connected to the network.

The network access device 120 may detect the current state of the network access device 120. If the network access device 120 is currently in a device access permitting state, the network access device 120 may judge whether the first communication device 110 is a device permitted by the network access device 120 to access the network. If the first communication device 110 is a device permitted by the network access device 120 to access the network, the network access device 120 connects the first communication device 110 to the network, and sends a response message to the first communication device 110 indicating that the first communication device 110 has been properly connected to the network. Wherein, the request message broadcast by the first communication device 110 may include at least one of the type identification and the address of the first communication device 110, and the network access device 120 may judge whether the first communication device 110 is a device permitted by the network access device 120 to access the network based on the type identification or the address of the first communication device 110. For example, the network access device 120 judges whether the type of the first communication device 110 is a type permitted by the network access device 120 to access the network based on the type identification of the first communication device 110. If the type of the first communication device 110 is a type permitted by the network access device 120 to access the network, the network access device 120 determines that the first communication device 110 is a device permitted by the network access device to access the network. For another example, the network access device 120 judges whether the address of the first communication device 110 belongs to a range of addresses permitted by the network access device 120 to access the network. If the address of the first communication device 110 belongs to a range of addresses permitted by the network access device 120 to access the network, the network access device 120 determines that the first communication device 110 is a device permitted by the network access device 120 to access the network.

The terminal 130 may be a terminal bound with the network access device 120. The terminal 130 may control the device access state of the network access device 120. As an example, the terminal 130 may be a smart mobile phone, a tablet computer, a smart TV, a desktop computer and the like. The terminal 130 may receive a state switching request sent by the network access device 120. Based on the state switching request, the terminal 130 generates a reply message, and sends the reply message to the network access device 120. If the reply message instructs the network access device 120 to switch the state to a device access permitting state, the network access device 120 switches the state of the network access device 120 to a device access permitting state.

The state switching request contains a device identification of the first communication device 110. The terminal 130 may receive a state switching request containing a device identification list which is sent by the network access device 120, the device identification list recording a device identification of each communication device which sends a request message during a preset time period since a moment when the request message sent by the first communication device 110 is received. Based on the state switching request, the terminal 130 may display the device identification list; receive a trigger instruction generated by a user triggering a target device identification (for example, a device identification of the second communication device 150), the target device identification being a device identification selected from the device identification list by the user; generate a reply message containing the target device identification based on the trigger instruction; and send the reply message containing the target device identification to the network access device 120, for the network access device 120 to connect the communication device corresponding to the target device identification to the network.

It should be noted that, a binding relationship is established between the terminal 130 and the network access device 120 in advance. The process of establishing the binding relationship between terminal 130 and the network access device 120 may be performed by the server 140 in the above implementation environment. Moreover, through the server 140, the network access device 120 may send the state switching request to the terminal 130, and the network access device 120 may receive the reply message sent by the terminal 130, which will not be elaborated in the present implementation environment.

It should be further noted that, the second communication device 150 and the first communication device 110 in the above implementation environment may be the same, or may be different, which is not limited by the present implementation environment.

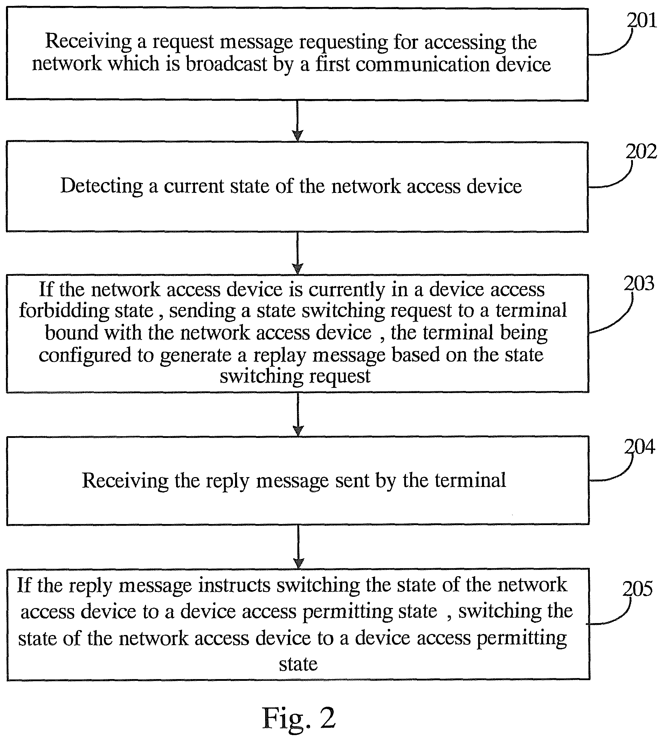

Fig. 2 is a flow chart of a method for accessing a network according to an exemplary embodiment. In the present embodiment, the method for accessing a network is applied in the network access device 120 in the implementation environment as shown in Fig. 1, for example. As shown in Fig. 2, the method for accessing a network may include the following steps.

In step 201, a request message requesting for accessing the network which is broadcast by a first communication device is received.

In step 202, a current state of the network access device is detected.

In step 203, if the network access device is currently in a device access forbidding state, a state switching request is sent to a terminal bound with the network access device, the terminal being configured to generate a reply message based on the state switching request.

In step 204, the reply message sent by the terminal is received.

In step 205, if the reply message instructs switching the state of the network access device to a device access permitting state, the state of the network access device is switched to a device access permitting state.

Accordingly, in the method for accessing a network provided by the embodiment of the present disclosure, the network access device receives a request message which is broadcast by a first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

The request message contains a device identification of the first communication device, and the state switching request contains the device identification of the first communication device. Then, the step 203 may include:
generating a device identification list, the device identification list recording a device identification of each communication device which sends a request message during a preset time period since a moment when the request message sent by the first communication device is received;
sending to the terminal bound with the network access device the state switching request containing the device identification list.

Optionally, the reply message contains a target device identification, the target device identification being a device identification selected from the device identification list by a user of the terminal, and the method further includes:
connecting a communication device corresponding to the target device identification to the network;
sending a response message to the communication device corresponding to the target device identification, the response message indicating that the communication device corresponding to the target device identification has been properly connected to the network.

Optionally, the method further includes:
if the network access device is currently in a device access permitting state, judging whether the first communication device is a device permitted by the network access device to access the network;
if the first communication device is a device permitted by the network access device to access the network, connecting the first communication device to the network; and
sending a response message to the first communication device, the response message indicating that the first communication device has been properly connected to the network.

Optionally, the request message contains a type identification of the first communication device;
judging whether the first communication device is a device permitted by the network access device to access the network, includes:
judging whether a type of the first communication device is a type permitted by the network access device to access the network based on the type identification of the first communication device; and
if the type of the first communication device is a type permitted by the network access device to access the network, determining that the first communication device is a device permitted by the network access device to access the network.

Optionally, the request message contains an address of the first communication device;
judging whether the first communication device is a device permitted by the network access device to access the network, includes:
judging whether the address of the first communication device belongs to a range of addresses permitted by the network access device to access the network;
if the address of the first communication device belongs to the range of addresses permitted by the network access device to access the network, determining that the first communication device is a device permitted by the network access device to access the network.

Optionally, the step 205 may include:
switching the state of the network access device to a device access permitting state and maintaining the network access device in the device access permitting state during a preset time period.

Accordingly, in the method for accessing a network provided by the embodiment of the present disclosure, the network access device receives a request message which is broadcast by a first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

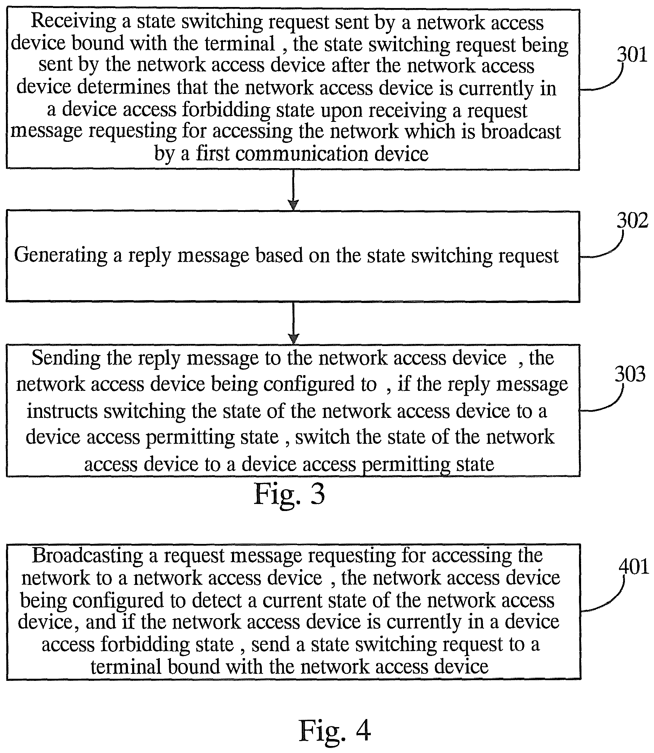

Fig. 3 is a flow chart of a method for accessing a network according to another exemplary embodiment. In the present embodiment, the method for accessing a network is applied in the terminal 130 in the implementation environment as shown in Fig. 1, for example. As shown in Fig. 3, the method for accessing a network may include the following steps.

In step 301, a state switching request sent by a network access device bound with the terminal is received, the state switching request being sent by the network access device after the network access device determines that the network access device is currently in a device access forbidding state upon receiving a request message requesting for accessing the network which is broadcast by a first communication device.

In step 302, a reply message is generated based on the state switching request.

In step 303, the reply message is sent to the network access device, the network access device being configured to, if the reply message instructs switching the state of the network access device to a device access permitting state, switch the state of the network access device to a device access permitting state.

Accordingly, in the method for accessing a network provided by the embodiment of the present disclosure, the terminal receives a state switching request sent by a network access device bound with the terminal; generates a reply message based on the state switching request; and sends the reply message to the network access device for the network access device to switch the state of the network access device to a device access permitting state based on the reply message. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

The state switching request contains a device identification of the first communication device, and the step 301 may include:
receiving a state switching request sent by the network access device bound with the terminal, the state switching request containing a device identification list, and the device identification list recording a device identification of each communication device which sends a request message during a preset time period since a moment when the request message sent by the first communication device is received.

Optionally, the step 302 may include:
displaying the device identification list based on the state switching request;
receiving a trigger instruction generated by a user triggering a target device identification, the target device identification being a device identification selected from the device identification list by the user; and
generating the reply message containing the target device identification based on the trigger instruction.

Accordingly, in the method for accessing a network provided by the embodiment of the present disclosure, the terminal receives a state switching request sent by a network access device bound with the terminal; generates a reply message based on the state switching request; and sends the reply message to the network access device for the network access device to switch the state of the network access device to a device access permitting state based on the reply message. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

Fig. 4 is a flow chart of a method for accessing a network according to an example. In the present example, the method for accessing a network is applied in the first communication device 110 in the implementation environment as shown in Fig. 1, for example. As shown in Fig. 4, the method for accessing a network may include the following steps.

In step 401, a request message requesting for accessing the network is broadcast to a network access device, the network access device being configured to detect a current state of the network access device, and if the network access device is currently in a device access forbidding state, send a state switching request to a terminal bound with the network access device.

Optionally, the request message contains a device identification of the first communication device, and the request message further contains at least one of a type identification of the first communication device and an address of the first communication device.

Accordingly, in the method for accessing a network provided by the example of the present disclosure, the first communication device broadcasts a request message requesting for accessing the network to a network access device. Then, the network access device sends a state switching request to a terminal bound with the network access device if the network access device is currently in a device access forbidding state; and switches the state of the network access device to a device access permitting state based on a reply message sent by the terminal. After the state of the network access device is switched to a device access permitting state, the first communication device may be connected to the network. In the example of the present disclosure, by the network access device sending a state switching request to the terminal, it may solve the problem in the related art that the network access process is complex, and it may achieve an advantageous effect of simplifying the network access process.

Fig. 5-1 is a flow chart of a method for accessing a network according to further still another exemplary embodiment. In the present embodiment, the method for accessing a network is applied in the implementation environment as shown in Fig. 1, for example. As shown in Fig. 5-1, the method for accessing a network may include the following steps.

In step 501, a first communication device broadcasts a request message requesting for accessing a network to the network access device, and the network access device is configured to detect a current state of the network access device, and if the network access device is currently in a device access forbidding state, send a state switching request to a terminal bound with the network access device.

Wherein, in the embodiment of the present disclosure, the first communication device is for example the first communication device 110 in the implementation environment as shown in Fig. 1, the network access device is for example the network access device 120 in the implementation environment as shown in Fig. 1, and the terminal bound with the network access device is for example the terminal 130 in the implementation environment as shown in Fig. 1.

Wherein, the first communication device 110 may be a device such as a smart camera, a smart socket, a smart bracelet, a smart TV, an infrared remote control and the like. If it is not connected to the network, the first communication device 110 may broadcast a request message requesting for accessing the network to the network access device 120, for the network access device 120 to provide a network access service for the first communication device 110.

Wherein, the request message may contain a device identification of the first communication device 110, and may also contain at least one of a type identification or an address of the first communication device 110. As an example, the request message may be a beacon request message, and the address of the first communication device 110 may be a MAC address of the first communication device 110. It is assumed that the device identification of the first communication device 110 is ID-A, the type identification is ID-m and the MAC address is ID-2. Then, the request message may include the device identification ID-A, and at least one of the type identification ID-m and the MAC address ID-2.

It should be noted that, the first communication device 110 may broadcast a request message requesting for accessing a network to the network access device 120 after the first communication device 110 is powered on and detects that itself is not connected in the network, or after the first communication device 110 is reset, which is not limited by the embodiment of the present disclosure. In one possible implementation, the first communication device 110 has once accessed the network and thus has network access information saved therein. Then, when the first communication device 110 is powered on, the first communication device 110 will firstly access the network according to the network access information saved therein. This is not limited by the embodiment of the present disclosure.

In step 502, the network access device receives the request message requesting for accessing the network which is broadcast by the first communication device.

When the first communication device 110 broadcasts to the network access device 120 the request message requesting for accessing the network, the network access device 120 may receive the request message requesting for accessing the network which is broadcast by the first communication device 110. As an example, the network access device 120 receives a beacon request message which is broadcast by the first communication device 110, and the beacon request message may include the device identification ID-A of first communication device 110, and at least one of the type identification ID-m and the MAC address ID-2 of first communication device 110.

In step 503, the network access device detects a current state of the network access device; if the network access device is currently in a device access forbidding state, steps 504- 511 are performed; and if the network access device is currently in a device access permitting state, steps 512- 514 are performed.

After it receives the request message requesting for accessing the network which is broadcast by the first communication device 110, the network access device 120 may detect the current state of the network access device 120. The current state of the network access device 120 may be either of a device access forbidding state and a device access permitting state.

In step 504, if it is currently in a device access forbidding state, the network access device sends a state switching request to a terminal bound with the network access device, and the terminal is configured to generate a reply message based on the state switching request.

If in step 503, the network access device 120 detects that the network access device 120 is currently in a device access forbidding state, the network access device 120 may send a state switching request to a terminal bound with the network access device 120. Wherein, the terminal bound with the network access device 120 may be the terminal 130 in the implementation environment as shown in Fig. 1. Then, the network access device 120 may send a state switching request to the terminal 130, and the state switching request may contain the device identification ID-A of the first communication device 110.

It should be noted that, in the embodiment of the present disclosure, the network access device 120 may immediately send a state switching request to the terminal 130 after it receives the request message broadcast by the first communication device 110, or it may detect whether a request message is received at a preset time period, and if a request message is received, the network access device 120 will send a state switching request to the terminal 130. Wherein, during the preset time period, the network access device 120 may receive request messages from various communication devices, and the preset time period may be set depending on practical situation, which is not limited by the embodiment of the present disclosure.

As an example, Fig. 5-2 shows a flow chart of a method for a network access device sending a state switching request to a terminal bound with the network access device according to the embodiment as shown in Fig. 5-1. In the present embodiment, the network access device 120 sends a state switching request to the terminal 130 at a preset time period, for example. As shown in Fig. 5-2, the method may include the following steps.

In sub-step 5041, the network access device generates a device identification list, the device identification list recording a device identification of each communication device which sends a request message during a preset time period since a moment when the request message sent by the first communication device is received.

If the network access device 120 sends a state switching request to the terminal 130 at a preset time period, the network access device 120 may firstly generate a device identification list based on the device identification of the communication device in the received request message. The device identification list may record a device identification of each communication device which sends a request message during a preset time period, since a moment when the request message sent by the first communication device 110 is received by the network access device 120. It is assumed that during the preset time period, the network access device 120 also receives request messages requesting for accessing the network which are sent by the second communication device 150 in the implementation environment as shown in Fig. 1 and other communication devices, and it is assumed that the device identification of the second communication device 150 is ID-B. Then the network access device 120 may generate a device identification list based on the device identification ID-A of the first communication device 110 and the device identification ID-B of the second communication device 150. The device identification list may be as shown in Table 1.

**Table 1**

| Device Identification |
|---|
| ID-A |
| ID-B |
| ...... |

In sub-step 5042, the network access device sends to the terminal bound with the network access device the state switching request containing the device identification list.

After it generates the device identification list, the network access device 120 may send to the terminal bound with the network access device 120 the state switching request containing the device identification list. As an example, the network access device 120 sends to the terminal 130 the state switching request containing the device identification list as shown in Table 1.

In step 505, the terminal receives the state switching request sent by the network access device bound with the terminal, the state switching request being sent by the network access device after the network access device determines that the network access device is currently in a device access forbidding state upon receiving a request message requesting for accessing the network which is broadcast by a first communication device.

When the network access device 120 sends a state switching request to the terminal bound with the network access device 120, the terminal bound with the network access device 120 may receive the state switching request sent by the network access device 120.

As an example, Fig. 5-3 is a flow chart of a method for a terminal receiving a state switching request sent by a network access device according to the embodiment as shown in Fig. 5-1. As shown in Fig. 5-3, the method may include the following steps.

In sub-step 5051, the terminal receives a state switching request sent by the network access device bound with the terminal, the state switching request containing a device identification list, and the device identification list recording a device identification of each communication device which sends a request message during a preset time period since a moment when the request message sent by the first communication device is received.

As an example, the terminal 130 receives a state switching request sent by the network access device 120, the state switching request containing a device identification list as shown in Table 1. The device identification list as shown in Table 1 records a device identification of each communication device which sends a request message during a preset time period, since a moment when the request message sent by the first communication device 110 is received by the network access device 120.

In step 506, the terminal generates a reply message based on the state switching request.

After it receives the state switching request sent by the network access device 120, the terminal 130 may generate a reply message based on the state switching request.

As an example, Fig. 5-4 is a flow chart of a method for a terminal generating a reply message based on a state switching request according to the embodiment as shown in Fig. 5-1. As shown in Fig. 5-4, the method includes the following steps.

In sub-step 5061, the terminal displays the device identification list based on the state switching request.

When the terminal 130 receives the state switching request containing the device identification list, the terminal 130 may display the device identification list. As an example, the terminal 130 displays the device identification list as shown in Table 1. It should be noted, when it displays the device identification list, the terminal 130 may also display a name of a communication device corresponding to the device identification and a prompt message.

As an example, Fig. 5-5 is schematic view of a display interface of a terminal according to the embodiment as shown in Fig. 5-1. As shown in Fig. 5-5, the terminal 130 currently displays a display interface 510. The display interface 510 contains a device identification list 511 and a prompt message "the following devices request for accessing the network, whether to switch the state?". Wherein, the device identification list 511 contains the first communication device and the device identification ID-A of the first communication device, the second communication device and the device identification ID-B of the second communication device. As shown in Fig. 5-5, the display interface 510 also contains a "yes" button and a "no" button.

It should be noted that, in the embodiment of the present disclosure, the terminal 130 displays the device identification list based on the state switching request, for example. In practical application, if the state switching request sent by the network access device 120 does not contain a device identification list, the terminal 130 may only display a prompt message. As an example, the prompt message may be "a communication device requests for accessing the network, whether to switch the state?". Alternatively, the prompt message may be "2 communication devices request for accessing the network, whether to switch the state?", and so on, which is not limited by the embodiment of the present disclosure.

In sub-step 5062, the terminal receives a trigger instruction generated by a user triggering a target device identification, the target device identification being a device identification selected from the device identification list by the user.

After the terminal 130 displays the device identification list, the user may select a device identification from the device identification list. Wherein, the device identification selected by the user may be referred to as a target device identification. Then, the network access device 120 switches the current state to a device access permitting state, and connects the communication device corresponding to the target device identification to the network. A trigger instruction may be generated when the user selects a target device identification, and the terminal 130 may receive the trigger instruction generated by the user triggering the target device identification.

As an example, as shown in Fig. 5-5, the user may click the device identification ID-B in the device identification list 511 in Fig. 5-5. Then, the device identification ID-B may be the target device identification. The terminal 130 may receive the trigger instruction generated by the user triggering the target device identification ID-B.

It should be noted that, in the embodiment of the present disclosure, when the terminal 130 receives the trigger instruction generated by the user triggering the target device identification, it may be considered that the user allows the network access device 120 to switch the current state to a device access permitting state, and only allows the network access device 120 to connect the communication device corresponding to the target device identification to the network. For example, the terminal 130 receives the trigger instruction generated by the user triggering the target device identification ID-B, and it is considered that the user allows the network access device 120 to switch the current state to a device access permitting state, and only allows the network access device 120 to connect the communication device (i.e. the second communication device) corresponding to the target device identification ID-B to the network.

It should be further noted that, as shown in Fig. 5-5, the user may also click the "yes" button in the display interface 510 in Fig. 5-5. At this time, a corresponding trigger instruction may also be generated. When the terminal 130 receives the trigger instruction, it may be considered that the user allows the network access device 120 to switch the current state to a device access permitting state, and allows the network access device 120 to connect all the communication devices which request for accessing the network to the network. However, if he does not allow the network access device 120 to switch the current state to a device access permitting state, the user may click the "no" button in the display interface 510 as shown in Fig. 5-5, to generate a corresponding trigger instruction.

In sub-step 5063, the terminal generates the reply message containing the target device identification based on the trigger instruction.

When it receives the trigger instruction generated by a user triggering the target device identification, the terminal 130 may generate a reply message containing the target device identification based on the trigger instruction. As an example, the reply message may be "permitting the communication device corresponding to the device identification ID-B to access network".

It should be noted that, if the user clicks the "yes" button in the display interface 510 as shown in Fig. 5-5, the reply message generated by the terminal 130 may be "permitting the current state to be switched to a device access permitting state". However, if the user clicks the "no" button in the display interface 510 as shown in Fig. 5-5, the reply message generated by the terminal 130 may be "forbidding the current state to be switched to a device access permitting state". Wherein, the reply messages as illustrated in the present embodiment are only exemplary, and do not limit the scope of the present disclosure.

In step 507, the terminal sends the reply message to the network access device, the network access device being configured to, if the reply message instructs switching the state of the network access device to a device access permitting state, switch the state of the network access device to a device access permitting state.

After it receives the state switching request sent by the network access device 120, the terminal 130 may send a reply message to the network access device 120. As an example, the terminal 130 sends a reply message "permitting the current state to be switched to a device access permitting state" or "permitting the communication device corresponding to the device identification ID-B to access network" to the network access device 120.

In step 508, the network access device receives the reply message sent by the terminal.

When the terminal 130 sends a reply message to the network access device 120, the network access device 120 may receive the reply message sent by the terminal 130. As an example, the network access device 120 receives the reply message "permitting the current state to be switched to a device access permitting state" or "permitting the communication device corresponding to the device identification ID-B to access network" sent by the terminal 130.

In step 509, if the reply message instructs switching the state of the network access device to a device access permitting state, the network access device switches the state of the network access device to a device access permitting state.

After the network access device 120 receives the reply message sent by the terminal 130, if the reply message instructs switching the state of the network access device 120 to a device access permitting state, the network access device 120 switches the state of the network access device to a device access permitting state. In the present embodiment, the reply message may be "permitting the current state to be switched to a device access permitting state" or "permitting the communication device corresponding to the device identification ID-B to access network". As the reply message instructs switching the state of the network access device 120 to a device access permitting state, the network access device 120 switches the state of the network access device 120 to a device access permitting state.

It should be noted that, after the network access device 120 switches the state of the network access device 120 to a device access permitting state, if the network access device 120 is always in the device access permitting state, the network access device 120 may connect malicious communication devices to the network. In this regard, the network access device 120 may be maintained in the device access permitting state for a preset time window, and then switched to the device access forbidding state. As an example, Fig. 5-6 is a flow chart of a method for a network access device switching itself to a device access permitting state according to the embodiment as shown in Fig. 5-1. As shown in Fig. 5-6, the method may include the following steps.

In sub-step 5091, the network access device switches the state of the network access device to a device access permitting state, and maintains the network access device in the device access permitting state during a preset time period.

After the network access device 120 receives the reply message sent by the terminal 130, if the reply message instructs switching the state of the network access device 120 to a device access permitting state, the network access device 120 switches the state of the network access device to a device access permitting state, and maintains the network access device 120 in the device access permitting state during a preset time period. Wherein, the preset time period may be set as desired, which is not limited by the embodiment of the present disclosure. As an example, the preset time period may be 1 minute.

It should be noted that, the preset time period may be negotiated in advance by the network access device 120 and the terminal 130, or may be determined by the network access device 120 based on its condition. Alternatively, the reply message sent by the terminal 130 may contain a time period, and the network access device 120 switches the state of the network access device 120 to a device access permitting state based on the time period in the reply message, such that the network access device 120 is maintained in the device access permitting state during the time period.

In step 510, the network access device connects a communication device corresponding to the target device identification to the network.

If in the step 508, the network access device 120 receives a reply message containing a target device identification, the network access device 120 may connect the communication device corresponding to the target device identification to the network. As an example, if the network access device 120 receives the reply message "permitting the communication device corresponding to the device identification ID-B to access network", the network access device 120 connects the communication device (i.e. the second communication device) corresponding to the target device identification ID-B to the network.

In step 511, the network access device sends a response message to the communication device corresponding to the target device identification, the response message indicating that the communication device corresponding to the target device identification has been properly connected to the network.

After it connects the communication device corresponding to the target device identification to the network, the network access device 120 may send a response message to the communication device corresponding to the target device identification, and the response message may include an associated permitting field. If the associated permitting field has a first preset value, it means that the response message indicates the connection to the network is properly completed, and if the associated permitting field has a second preset value, it means that the response message indicates the connection to the network fails. As an example, the first preset value may be 1, and the second preset value may be 0.

In the embodiment of the present disclosure, the communication device corresponding to the target device identification is properly connected to the network. Then, the associated permitting field of the response message has the first preset value. For example, the network access device 120 sends a response message to the second communication device, a response message with the associated permitting field being the first preset value which indicates that the second communication device has been properly connected to the network.

In step 512, if the network access device is currently in a device access permitting state, the network access device judges whether the first communication device is a device permitted by the network access device to access the network.

If in the step 503, the network access device 120 detects that the network access device 120 is currently in a device access permitting state, the network access device 120 may judge whether the first communication device 110 is a device permitted by the network access device 120 to access the network.

Wherein, since the request message broadcast by the first communication device 110 may include at least one of the type identification and the address of the first communication device 110, the network access device 120 may judge whether the first communication device 110 is a device permitted by the network access device 120 to access the network based on the type identification and the address of the first communication device 110.

As an example, Fig. 5-7 is a flow chart of a method for a network access device 120 judging whether the first communication device 110 is a device permitted by the network access device 120 to access the network. In the embodiment of the present disclosure, the network access device 120 judges whether the first communication device 110 is a device permitted by the network access device 120 to access the network based on the type identification of the first communication device 110. As shown in Fig. 5-7, the method includes the following steps.

In sub-step 5121a, the network access device judges whether a type of the first communication device is a type permitted by the network access device to access the network based on the type identification of the first communication device.

Wherein, the network access device 120 may store type identifications which are permitted to access the network. The network access device 120 may judge whether the type of the first communication device 110 is a type permitted by the network access device 120 to access the network based on the type identification of the first communication device 110 and the type identifications stored in the network access device 120. As an example, based on the type identification of the first communication device 110, the network access device 120 may search in the type identifications stored in the network access device 120, if the type identification of the first communication device 110 matches one of the type identifications stored in the network access device 120, the network access device 120 determines that the type of the first communication device 110 is a type permitted by the network access device 120 to access the network. As an example, the type identifications stored in the network access device 120 may be as shown in the following Table 2.

**Table 2**

| Type Identification |
|---|
| ID-n |
| ID-m |
| ...... |

As shown in Table 2, the type identifications stored in the network access device 120 include ID-n and ID-m. While as illustrated in step 501, the type identification of the first communication device 110 is ID-m. Since the type identification ID-m of the first communication device 110 matches one of the type identifications stored in the network access device 120, the network access device 120 determines that the type of the first communication device 110 is a type permitted by the network access device 120 to access the network.

In sub-step 5122a, if the type of the first communication device is a type permitted by the network access device to access the network, the network access device determines that the first communication device is a device permitted by the network access device to access the network.

If in the sub-step 5121a, the network access device 120 determines that the type of the first communication device 110 is a type permitted by the network access device 120 to access the network, the network access device 120 determines that the first communication device 110 is a device permitted by the network access device 120 to access the network. In the embodiment of the present disclosure, since the type of the first communication device 110 is a type permitted by the network access device 120 to access the network, the first communication device 110 is a device permitted by the network access device 120 to access the network.

As another example, Fig. 5-8 is a flow chart of another method for a network access device judging whether a first communication device is a device permitted by the network access device to access the network. In the present embodiment, the network access device 120 judges whether the first communication device 110 is a device permitted by the network access device 120 to access the network based on the address of the first communication device 110. As shown in Fig. 5-8, the method may include the following steps.

In sub-step 5121b, the network access device judges whether the address of the first communication device belongs to a range of addresses permitted by the network access device to access the network.

Wherein, the network access device 120 may store an address range which is permitted to access the network, and based on the address of the first communication device 110, the network access device 120 may judge whether the address of the first communication device 110 belongs to the address range permitted to access the network which is stored in the network access device 120. As an example, the address range permitted to access the network which is stored in the network access device 120 may be [ID-1, ID-100] which contains 100 addresses, respectively ID-1, ID-2, ID-3,...ID-100.

While as illustrated in step 501, the address of the first communication device 110 is ID-2, then the address of the first communication device 110 belongs to the address range [ID-1, ID-100] permitted to access the network which is stored in the network access device 120.

In sub-step 5122b, if the address of the first communication device belongs to the range of addresses permitted by the network access device to access the network, the network access device determines that the first communication device is a device permitted by the network access device to access the network.

If in the sub-step 5121b, the network access device 120 determines that the address of the first communication device 110 belongs to the range of addresses permitted by the network access device 120 to access the network, the network access device 120 determines that the first communication device 110 is a device permitted by the network access device 120 to access the network. In the embodiment of the present disclosure, since the address ID-2 of the first communication device 110 belongs to the address range [ID-1, ID-100] permitted by the network access device 120 to access the network, the network access device 120 determines that the first communication device 110 is a device permitted by the network access device 120 to access the network.

In step 513, if the first communication device is a device permitted by the network access device to access the network, the network access device connects the first communication device to the network.

If in the step 512, the network access device 120 determines that the first communication device 110 is a device permitted by the network access device 120 to access the network, the network access device 120 connects the first communication device 110 to the network. In the embodiment of the present disclosure, since the first communication device 110 is a device permitted by the network access device 120 to access the network, the network access device 120 connects the first communication device 110 to the network.

In step 514, the network access device sends a response message to the first communication device, the response message indicating that the first communication device has been properly -connected to the network.

After it connects the first communication device 110 to the network, the network access device 120 may send a response message to the first communication device 110. The response message may include an associated permitting field. If the associated permitting field has a first preset value, it means that the response message indicates the connection to the network is properly completed, and if the associated permitting field has a second preset value, it means that the response message indicates the connection to the network fails. As an example, the first preset value may be 1, and the second preset value may be 0. In the embodiment of the present disclosure, the first communication device 110 is properly connected to the network, then the associated permitting field in the response message is the first preset value.

It should be noted that, if in the step 503, the network access device 120 detects that the network access device 120 is currently in a device access forbidding state, the network access device 120 may also send a response message to the first communication device 110 with the associated permitting field in the response message being the second preset value, which means that the connection of the first communication device 110 to the network fails, such that the first communication device 110 may broadcast again a request message requesting for accessing the network to the network access device 120.

It should be noted that orders of the steps of the methods for accessing a network provided by the embodiment of the present disclosure may be properly adjusted, and may be added or removed as desired. As an example, steps 512-514 may be performed after the steps 504-511, or prior to the steps 504-511. Modification may be easily anticipated by one skilled in the art within the disclosed technical scope of the present disclosure, and it should be covered in the protective scope of the present disclosure, which will not be elaborated herein.

Accordingly, in the method for accessing a network provided by the embodiment of the present disclosure, the network access device receives a request message which is broadcast by a first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

The following are device embodiments of the present disclosure, which may be configured to perform the method embodiments of the present disclosure. For details that are not disclosed in the device embodiments of the present disclosure, reference may be made to the method embodiments of the present disclosure.

Fig. 6 is a block diagram of a device for accessing a network according to an exemplary embodiment, the device for accessing a network may be implemented as a part or the whole of the network device 120 in the implementation environment as shown in Fig. 1 in a form of software, hardware or combination of both. As shown in Fig. 6, the device for accessing a network may include:
a first receiving module 610 configured to receive a request message requesting for accessing the network which is broadcast by a first communication device;
a detecting module 620 configured to detect a current state of the network access device;
a first sending module 630 configured to, if the detecting module 620 determines that the network access device is currently in a device access forbidding state, send a state switching request to a terminal bound with the network access device, the terminal being configured to generate a reply message based on the state switching request;
a second receiving module 640 configured to receive the reply message sent by the terminal; and
a switching module 650 configured to, if the reply message which is received by the second receiving module 640 instructs switching the state of the network access device to a device access permitting state, switch the state of the network access device to a device access permitting state.

Accordingly, in the device for accessing a network provided by the embodiment of the present disclosure, the network access device receives a request message which is broadcast by a first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

Fig. 7 is a block diagram of a device for accessing a network according to another exemplary embodiment, the device for accessing a network may be implemented as a part or the whole of the network device 120 in the implementation environment as shown in Fig. 1 in a form of software, hardware or combination of both. As shown in Fig. 7, the device for accessing a network may include but not limited to:
a first receiving module 701 configured to receive a request message requesting for accessing the network which is broadcast by a first communication device;
a detecting module 702 configured to detect a current state of the network access device;
a first sending module 703 configured to, if the detecting module 702 determines that the network access device is currently in a device access forbidding state, send a state switching request to a terminal bound with the network access device, the terminal being configured to generate a reply message based on the state switching request;
a second receiving module 704 configured to receive the reply message sent by the terminal; and
a switching module 705 configured to, if the reply message which is received by the second receiving module 704 instructs switching the state of the network access device to a device access permitting state, switch the state of the network access device to a device access permitting state.

The request message contains a device identification of the first communication device, and the state switching request contains the device identification of the first communication device;
the first sending module 703 is configured to generate a device identification list, the device identification list recording a device identification of each communication device which sends a request message during a preset time period since a moment when the request message sent by the first communication device is received; and send to the terminal bound with the network access device the state switching request containing the device identification list.

Optionally, the reply message contains a target device identification, the target device identification being a device identification selected from the device identification list by a user of the terminal, and the device for accessing a network further includes:
a first connecting module 706 configured to connect a communication device corresponding to the target device identification to the network;
a second sending module 707 configured to send a response message to the communication device corresponding to the target device identification, the response message indicating that the communication device corresponding to the target device identification has been properly connected to the network.

Optionally, the device for accessing a network further includes:
a judging module 708 configured to, if the detecting module 702 determines that the network access device is currently in a device access permitting state, judge whether the first communication device is a device permitted by the network access device to access the network;
a second connecting module 709 configured to, if the judging module 708 determines that the first communication device is a device permitted by the network access device to access the network, connect the first communication device to the network; and
a third sending module 710 configured to send a response message to the first communication device, the response message indicating that the first communication device has been properly connected to the network.

Optionally, the request message contains a type identification of the first communication device;
the judging module 708 is configured to: judge whether a type of the first communication device is a type permitted by the network access device to access the network based on the type identification of the first communication device; and if the type of the first communication device is a type permitted by the network access device to access the network, determine that the first communication device is a device permitted by the network access device to access the network.

Optionally, the request message contains an address of the first communication device;
the judging module 708 is configured to: judge whether the address of the first communication device belongs to a range of addresses permitted by the network access device to access the network; and if the address of the first communication device belongs to the range of addresses permitted by the network access device to access the network, determine that the first communication device is a device permitted by the network access device to access the network.

Optionally, the switching module 705 is configured to switch the state of the network access device to a device access permitting state, and maintain the network access device in the device access permitting state during a preset time period.

Accordingly, in the device for accessing a network provided by the embodiment of the present disclosure, the network access device receives a request message which is broadcast by a first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

Fig. 8 is a block diagram of a device for accessing a network according to still another exemplary embodiment, the device for accessing a network may be implemented as a part or the whole of the terminal 130 in the implementation environment as shown in Fig. 1 in a form of software, hardware or combination of both. As shown in Fig. 8, the device for accessing a network may include:
a receiving module 810 configured to receive a state switching request sent by a network access device bound with the terminal, the state switching request being sent by the network access device after the network access device determines that the network access device is currently in a device access forbidding state upon receiving a request message requesting for accessing the network which is broadcast by a first communication device;
a generating module 820 configured to generate a reply message based on the state switching request received by the receiving module 810; and
a sending module 830 configured to send the reply message generated by the generating module 820 to the network access device, the network access device being configured to, if the reply message instructs switching the state of the network access device to a device access permitting state, switch the state of the network access device to a device access permitting state.

Accordingly, in the device for accessing a network provided by the embodiment of the present disclosure, the terminal receives a state switching request sent by a network access device bound with the terminal; generates a reply message based on the state switching request; and sends the reply message to the network access device for the network access device to switch the state of the network access device to a device access permitting state based on the reply message. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

The state switching request contains a device identification of the first communication device;
the receiving module 810 is configured to receive a state switching request sent by the network access device bound with the terminal, the state switching request containing a device identification list, and the device identification list recording a device identification of each communication device which sends a request message during a preset time period since a moment when the request message sent by the first communication device is received.

Optionally, the generating module 820 is configured to display the device identification list based on the state switching request; receive a trigger instruction generated by a user triggering a target device identification, the target device identification being a device identification selected from the device identification list by the user; and generate the reply message containing the target device identification based on the trigger instruction.

Accordingly, in the device for accessing a network provided by the embodiment of the present disclosure, the terminal receives a state switching request sent by a network access device bound with the terminal; generates a reply message based on the state switching request; and sends the reply message to the network access device for the network access device to switch the state of the network access device to a device access permitting state based on the reply message. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

Fig. 9 is a block diagram of a device for accessing a network according to still another exemplary embodiment, the device for accessing a network may be implemented as a part or the whole of the first communication device 110 in the implementation environment as shown in Fig. 1 in a form of software, hardware or combination of both. As shown in Fig. 9, the device for accessing a network may include:
a broadcasting module 910 configured to broadcast a request message requesting for accessing the network to a network access device, the network access device being configured to detect a current state of the network access device, and if the network access device is currently in a device access forbidding state, send a state switching request to a terminal bound with the network access device.

Optionally, the request message contains a device identification of the first communication device, and the request message further contains at least one of a type identification of the first communication device and an address of the first communication device.

Accordingly, in the device for accessing a network provided by the embodiment of the present disclosure, the first communication device broadcasts a request message requesting for accessing the network to a network access device. Then, the network access device sends a state switching request to a terminal bound with the network access device if the network access device is currently in a device access forbidding state; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

Fig. 10 is a block diagram of a device 1000 for accessing a network according to an exemplary embodiment. The device 1000 may be the network access device 120 in the implementation environment as shown in Fig. 1. For example, the device 1000 may be a gateway, a router and the like.

Referring to Fig. 10, the device 1000 may include one or more of the following components: a processing component 1002, a memory 1004, a power component 1006, an input/output (I/O) interface 1008, a sensor component 1010, and a communication component 1012.

The processing component 1002 typically controls overall operations of the device 1000, such as the operations associated with data communications and recording operations. The processing component 1002 may include one or more processors 1020 to execute instructions to perform all or part of the steps in the above described methods. Moreover, the processing component 1002 may include one or more modules which facilitate the interaction between the processing component 1002 and other components.

The memory 1004 is configured to store various types of data to support the operation of the device 1000. Examples of such data include instructions for any applications or methods operated on the device 1000, messages, etc. The memory 1004 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1006 provides power to various components of the device 1000. The power component 1006 may include a power management system, one or more power sources, and any other components associated with the generation, management, and distribution of power in the device 1000.

The I/O interface 1008 provides an interface between the processing component 1002 and peripheral interface modules, such as a click wheel, buttons, and the like. The buttons may include, but are not limited to, a starting button and a locking button.

The sensor component 1010 includes one or more sensors to provide status assessments of various aspects of the device 1000. For instance, the sensor component 1010 may detect an open/closed status of the device 1000, relative positioning of components, e.g., a button, of the device 1000, a change in position of the device 1000 or a component of the device 1000, a presence or absence of user contact with the device 1000. The sensor component 1010 may include a proximity sensor configured to detect the presence of nearby objects without any physical contact. In some embodiments, the sensor component 1010 may also include an accelerometer sensor, a gyroscope sensor, a magnetic sensor, a pressure sensor, or a temperature sensor.

The communication component 1012 is configured to facilitate communication, wired or wirelessly, between the device 1000 and other devices. The device 1000 can access a wireless network based on a communication standard, such as WiFi, 2G, or 3G, or a combination thereof. In one exemplary embodiment, the communication component 1012 receives a broadcast signal or broadcast associated information from an external broadcast management system via a broadcast channel. In one exemplary embodiment, the communication component 1012 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 1000 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1004, executable by the processor 1020 in the device 1000, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of the device 1000, the device 1000 is caused to perform a method for accessing a network, including:
receiving a request message requesting for accessing the network which is broadcast by a first communication device;
detecting a current state of the network access device;
if the network access device is currently in a device access forbidding state, sending a state switching request to a terminal bound with the network access device, the terminal being configured to generate a reply message based on the state switching request;
receiving the reply message sent by the terminal; and
if the reply message instructs switching the state of the network access device to a device access permitting state, switching the state of the network access device to a device access permitting state.

The request message contains a device identification of the first communication device, and the state switching request contains the device identification of the first communication device, and sending a state switching request to a terminal bound with the network access device, includes:
generating a device identification list, the device identification list recording a device identification of each communication device which sends a request message during a preset time period since a moment when the request message sent by the first communication device is received; and
sending to the terminal bound with the network access device the state switching request containing the device identification list.

Optionally, the reply message contains a target device identification, the target device identification being a device identification selected from the device identification list by a user of the terminal, and the method further includes:
connecting a communication device corresponding to the target device identification to the network; and
sending a response message to the communication device corresponding to the target device identification, the response message indicating that the communication device corresponding to the target device identification has been properly connected to the network.

Optionally, the method further includes:
if the network access device is currently in a device access permitting state, judging whether the first communication device is a device permitted by the network access device to access the network;
if the first communication device is a device permitted by the network access device to access the network, connecting the first communication device to the network; and
sending a response message to the first communication device, the response message indicating that the first communication device has been properly connected to the network.

Optionally, the request message contains a type identification of the first communication device;
judging whether the first communication device is a device permitted by the network access device to access the network, includes:
judging whether a type of the first communication device is a type permitted by the network access device to access the network based on the type identification of the first communication device; and
if the type of the first communication device is a type permitted by the network access device to access the network, determining that the first communication device is a device permitted by the network access device to access the network.
Optionally, the request message contains an address of the first communication device;
judging whether the first communication device is a device permitted by the network access device to access the network, includes:
judging whether the address of the first communication device belongs to a range of addresses permitted by the network access device to access the network; and
if the address of the first communication device belongs to the range of addresses permitted by the network access device to access the network, determining that the first communication device is a device permitted by the network access device to access the network.

Optionally, switching the state of the network access device to a device access permitting state, includes:
switching the state of the network access device to a device access permitting state, and maintaining the network access device in the device access permitting state during a preset time period.

Accordingly, in the device for accessing a network provided by the embodiment of the present disclosure, the network access device receives a request message which is broadcast by a first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

Fig. 11 is a block diagram of a device 1100 for accessing a network according to another exemplary embodiment. The device 1100 may be the terminal 130 in the implementation environment as shown in Fig. 1. For example, the device 1100 may be a mobile phone, a computer, a digital broadcast terminal, a messaging device, a gaming console, a tablet, a medical device, exercise equipment, a personal digital assistant, and the like.

Referring to Fig. 11, the device 1100 may include one or more of the following components: a processing component 1102, a memory 1104, a power component 1106, a multimedia component 1108, an audio component 1110, an input/output (I/O) interface 1112, a sensor component 1114, and a communication component 1116.

The processing component 1102 typically controls overall operations of the device 1100, such as the operations associated with display, telephone calls, data communications, camera operations, and recording operations. The processing component 1102 may include one or more processors 1120 to execute instructions to perform all or part of the steps in the above described methods. Moreover, the processing component 1102 may include one or more modules which facilitate the interaction between the processing component 1102 and other components. For instance, the processing component 1102 may include a multimedia module to facilitate the interaction between the multimedia component 1108 and the processing component 1102.

The memory 1104 is configured to store various types of data to support the operation of the device 1100. Examples of such data include instructions for any applications or methods operated on the device 1100, contact data, phonebook data, messages, pictures, video, etc. The memory 1104 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some examples, the multimedia component 1108 includes a front camera and/or a rear camera. The front camera and/or the rear camera may receive an external multimedia datum while the device 1100 is in an operation mode, such as a photographing mode or a video mode. Each of the front camera and the rear camera may be a fixed optical lens system or have focus and optical zoom capability.

The audio component 1110 is configured to output and/or input audio signals. For example, the audio component 1110 includes a microphone ("MIC") configured to receive an external audio signal when the device 1100 is in an operation mode, such as a call mode, a recording mode, and a voice recognition mode. The received audio signal may be further stored in the memory 1104 or transmitted via the communication component 1116. In some examples, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1114 includes one or more sensors to provide status assessments of various aspects of the device 1100. For instance, the sensor component 1114 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1114 may include a proximity sensor configured to detect the presence of nearby objects without any physical contact. The sensor component 1114 may also include a light sensor, such as a CMOS or CCD image sensor, for use in imaging applications. In some examples, the sensor component 1114 may also include an accelerometer sensor, a gyroscope sensor, a magnetic sensor, a pressure sensor, or a temperature sensor.

The communication component 1116 is configured to facilitate communication, wired or wirelessly, between the device 1100 and other devices. The device 1100 can access a wireless network based on a communication standard, such as WiFi, 2G, or 3G, or a combination thereof. In one example, the communication component 1116 receives a broadcast signal or broadcast associated information from an external broadcast management system via a broadcast channel. In one example, the communication component 1116 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In examples, the device 1100 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer-readable storage medium including instructions, such as included in the memory 1104, executable by the processor 1120 in the device 1100, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of the device 1100, the device 1100 is caused to perform a method for accessing a network, including:
receiving a state switching request sent by a network access device bound with the terminal, the state switching request being sent by the network access device after the network access device determines that the network access device is currently in a device access forbidding state upon receiving a request message requesting for accessing the network which is broadcast by a first communication device;
generating a reply message based on the state switching request; and
sending the reply message to the network access device, the network access device being configured to, if the reply message instructs switching the state of the network access device to a device access permitting state, switch the state of the network access device to a device access permitting state.

The state switching request contains a device identification of the first communication device, receiving a state switching request sent by a network access device bound with the terminal, includes:
receiving a state switching request sent by the network access device bound with the terminal, the state switching request containing a device identification list, and the device identification list recording a device identification of each communication device which sends a request message during a preset time period since a moment when the request message sent by the first communication device is received.

Optionally, generating a reply message based on the state switching request, includes:
displaying the device identification list based on the state switching request;
receiving a trigger instruction generated by a user triggering a target device identification, the target device identification being a device identification selected from the device identification list by the user; and
generating the reply message containing the target device identification based on the trigger instruction.

Accordingly, in the device for accessing a network provided by the embodiment of the present disclosure, the terminal receives a state switching request sent by a network access device bound with the terminal; generates a reply message based on the state switching request; and sends the reply message to the network access device for the network access device to switch the state of the network access device to a device access permitting state based on the reply message. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

Fig. 12 is a block diagram of a device 1200 for accessing a network according to an example. The device 1200 may be the first communication device 110 in the implementation environment as shown in Fig. 1. For example, the device 1200 may be a smart camera, a smart socket, a mobile phone, a computer, a digital broadcast terminal, a messaging device, a gaming console, a tablet, a medical device, exercise equipment, a personal digital assistant, and the like.

Referring to Fig. 12, the device 1200 may include one or more of the following components: a processing component 1202, a memory 1204, a power component 1206, a multimedia component 1208, an audio component 1210, an input/output (I/O) interface 1212, a sensor component 1214, and a communication component 1216.

The processing component 1202 typically controls overall operations of the device 1200, such as the operations associated with display, telephone calls, data communications, camera operations, and recording operations. The processing component 1202 may include one or more processors 1220 to execute instructions to perform all or part of the steps in the above described methods. Moreover, the processing component 1202 may include one or more modules which facilitate the interaction between the processing component 1202 and other components. For instance, the processing component 1202 may include a multimedia module to facilitate the interaction between the multimedia component 1208 and the processing component 1202.

The memory 1204 is configured to store various types of data to support the operation of the device 1200. Examples of such data include instructions for any applications or methods operated on the device 1200, contact data, phonebook data, messages, pictures, video, etc. The memory 1204 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 1206 provides power to various components of the device 1200. The power component 1206 may include a power management system, one or more power sources, and any other components associated with the generation, management, and distribution of power in the device 1200.

The multimedia component 1208 includes a screen providing an output interface between the device 1200 and the user. In some examples, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some examples, the multimedia component 1208 includes a front camera and/or a rear camera. The front camera and/or the rear camera may receive an external multimedia datum while the device 1200 is in an operation mode, such as a photographing mode or a video mode. Each of the front camera and the rear camera may be a fixed optical lens system or have focus and optical zoom capability.

The audio component 1210 is configured to output and/or input audio signals. For example, the audio component 1210 includes a microphone ("MIC") configured to receive an external audio signal when the device 1200 is in an operation mode, such as a call mode, a recording mode, and a voice recognition mode. The received audio signal may be further stored in the memory 1204 or transmitted via the communication component 1216. In some examples, the audio component 1210 further includes a speaker to output audio signals.

The I/O interface 1212 provides an interface between the processing component 1202 and peripheral interface modules, such as a keyboard, a click wheel, buttons, and the like. The buttons may include, but are not limited to, a home button, a volume button, a starting button, and a locking button.

The sensor component 1214 includes one or more sensors to provide status assessments of various aspects of the device 1200. For instance, the sensor component 1214 may detect an open/closed status of the device 1200, relative positioning of components, e.g., the display and the keypad, of the device 1200, a change in position of the device 1200 or a component of the device 1200, a presence or absence of user contact with the device 1200, an orientation or an acceleration/deceleration of the device 1200, and a change in temperature of the device 1200. The sensor component 1214 may include a proximity sensor configured to detect the presence of nearby objects without any physical contact. The sensor component 1214 may also include a light sensor, such as a CMOS or CCD image sensor, for use in imaging applications. In some examples, the sensor component 1214 may also include an accelerometer sensor, a gyroscope sensor, a magnetic sensor, a pressure sensor, or a temperature sensor.

The communication component 1216 is configured to facilitate communication, wired or wirelessly, between the device 1200 and other devices. The device 1200 can access a wireless network based on a communication standard, such as WiFi, 2G, or 3G, or a combination thereof. In one example, the communication component 1216 receives a broadcast signal or broadcast associated information from an external broadcast management system via a broadcast channel. In an example, the communication component 1216 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In examples, the device 1200 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In examples, there is also provided a non-transitory computer-readable storage medium including instructions, such as included in the memory 1204, executable by the processor 1220 in the device 1200, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of the device 1200, the device 1200 is caused to perform a method for accessing a network, including:
broadcasting a request message requesting for accessing the network to a network access device, the network access device being configured to detect a current state of the network access device, and if the network access device is currently in a device access forbidding state, send a state switching request to a terminal bound with the network access device.

Optionally, the request message contains a device identification of the first communication device, and the request message further contains at least one of a type identification of the first communication device and an address of the first communication device.

Accordingly, in the device for accessing a network provided by the example of the present disclosure, the first communication device broadcasts a request message requesting for accessing the network to a network access device. Then, the network access device sends a state switching request to a terminal bound with the network access device if the network access device is currently in a device access forbidding state; and switches the state of the network access device to a device access permitting state based on a reply message sent by the terminal. After the state of the network access device is switched to a device access permitting state, the first communication device may be connected to the network. In the example of the present disclosure, by the network access device sending a state switching request to the terminal, it may solve the problem in the related art that the network access process is complex, and it may achieve an advantageous effect of simplifying the network access process.

Fig. 13 is a schematic diagram of a system 1300 for accessing a network according to an exemplary embodiment. As shown in Fig. 13, the system 1300 for accessing a network may include a first communication device 1310, a network access device 1320 and a terminal 1330.

Wherein, the first communication device 1310 includes the device for accessing a network as shown in Fig. 9 or 12.

The network access device 1320 includes the device for accessing a network as shown in Fig. 6, 7 or 10.

The terminal 1330 includes the device for accessing a network as shown in Fig. 8 or 11.

Accordingly, in the system for accessing a network provided by the embodiment of the present disclosure, the first communication device sends a request message to the network access device. The network access device receives the request message broadcast by the first communication device; detects a current state of the network access device; if the network access device is currently in a device access forbidding state, sends a state switching request to a terminal bound with the network access device; and switches the state of the network access device to a device access permitting state based on a reply message sent by the terminal. After the state of the network access device is switched to a device access permitting state, the first communication device may be connected to the network. In the embodiment of the present disclosure, by the network access device sending a state switching request to the terminal, it may solve the problem in the related art that the network access process is complex, and it may achieve an advantageous effect of simplifying the network access process.

## Claims

1. A method for accessing a network, said method being implemented by a network access device, the method comprising steps of:
receiving (201, 502) a request message requesting for accessing the network, wherein the request message is broadcast by a first communication device, wherein the request message contains a device identification of the first communication device;
detecting (202, 503) a current state of the network access device;
if the network access device is currently in a device access forbidding state, sending (203, 504) a state switching request to a terminal for which a binding relationship is established with the network access device in advance, wherein the state switching request contains the device identification of the first communication device;
receiving (204, 508) a reply message sent by the terminal, the reply message being generated by the terminal based on the state switching request and containing a target device identification, the target device identification being a device identification selected from the device identification list by a user of the terminal; and
if the reply message instructs switching the state of the network access device to a device access permitting state, switching (205, 509) the state of the network access device to a device access permitting state;
**characterized in that** the step (203, 504) of sending a state switching request to a terminal for which a binding relationship is established with the network access device in advance comprises steps of:
generating (5041) a device identification list, the device identification list recording a device identification of each communication device which sends a request message during a preset time period since a moment when the request message sent by the first communication device is received by the network access device; and
sending (5042), to the terminal for which a binding relationship is established with the network access device in advance, the state switching request containing the device identification list.

2. The method according to claim 1, wherein the reply message contains a target device identification, the target device identification being a device identification selected from the device identification list by a user of the terminal, and the method further comprises steps of:
connecting (510) a communication device corresponding to the target device identification to the network; and
sending (511) a response message to the communication device corresponding to the target device identification, the response message indicating that the communication device corresponding to the target device identification has been properly connected to the network.

3. The method according to any one of claims 1 to 2, wherein the method further comprises the steps of:
if the network access device is currently in a device access permitting state, judging (512) whether the first communication device is a device permitted by the network access device to access the network;
if the first communication device is judged to be a device permitted by the network access device to access the network, connecting (513) the first communication device to the network; and
sending (514) a response message to the first communication device, the response message indicating that the first communication device has been properly connected to the network.

4. The method according to claim 3, wherein the request message contains a type identification of the first communication device; and wherein the step of judging (512) whether the first communication device is a device permitted by the network access device to access the network comprises the steps of:
judging (5121a) whether the type of the first communication device is a type permitted by the network access device to access the network based on the type identification of the first communication device; and
if the type of the first communication device is judged to be a type permitted by the network access device to access the network, determining (5121b) that the first communication device is a device permitted by the network access device to access the network.

5. The method according to claim 3, wherein the request message contains an address of the first communication device; and wherein the step of judging (512) whether the first communication device is a device permitted by the network access device to access the network comprises steps of :
judging (5122a) whether the address of the first communication device belongs to a range of addresses permitted by the network access device to access the network; and
if the address of the first communication device is judged to belong to the range of addresses permitted by the network access device to access the network, determining (5122b) that the first communication device is a device permitted by the network access device to access the network.

6. The method according to any one of claims 1 to 5, wherein the step of switching (205, 509) the state of the network access device to a device access permitting state comprises steps of:
switching (5091) the state of the network access device to a device access permitting state, and maintaining the network access device in the device access permitting state during a preset time window.

7. A method for accessing a network, said method being implemented by a terminal and comprising the steps of:
receiving (301, 505) a state switching request sent by a network access device for which a binding relationship is established with the terminal in advance, wherein the state switching request contains a device identification of a first communication device;
generating (302, 506) a reply message based on the state switching request; and
sending (303, 507) the reply message to the network access device, the reply message instructing if the network access device is to switch the state of the network access device from a device access forbidding state to a device access permitting state;
**characterized in that** the step of receiving (301, 505) a state switching request sent by a network access device for which a binding relationship is established with the terminal in advance, comprises a step of :
receiving (5051) a state switching request sent by the network access device for which a binding relationship is established with the terminal in advance, the state switching request containing a device identification list, and the device identification list recording a device identification of each communication device which sends a request message requesting the network to the network access device during a preset time period since a moment when the request message sent by the first communication device is received by the network access device; and **in that** the reply message contains a target device identification, the target device identification being a device identification selected from the device identification list by a user of the terminal.

8. The method according to claim 7, wherein the step of generating (302, 506) a reply message based on the state switching request comprises the steps of:
displaying (5061) the device identification list based on the state switching request;
receiving (5062) a trigger instruction generated by a user triggering a target device identification, the target device identification being a device identification selected from the device identification list by the user; and
generating (5063) the reply message containing the target device identification based on the trigger instruction.

9. A method for accessing a network, said method being implemented by a first communication device and a network access device and comprising:
a step of broadcasting (401, 501) by the first communication device a request message requesting for accessing the network to the network access device; and
the steps of a method according to any one of claims 1-6 implemented by the network access device

10. A network access device comprising:
a first receiving module (610, 701) configured to receive a request message requesting for accessing the network which is broadcast by a first communication device, wherein the request message contains a device identification of the first communication device;
a detecting module (620, 702) configured to detect a current state of the network access device;
a first sending module (630, 703) configured to, if the network access device is currently in a device access forbidding state, send a state switching request to a terminal for which a binding relationship is established with the network access device in advance, wherein the state switching request contains the device identification of the first communication device;
a second receiving module (640, 704) configured to receive a reply message sent by the terminal, the reply message being generated by the terminal based on the state switching request and containing a target device identification, the target device identification being a device identification selected from the device identification list by a user of the terminal; and
a switching module (650, 705) configured to, if the reply message instructs switching the state of the network access device to a device access permitting state, switch the state of the network access device to a device access permitting state;
**characterized in that** the first sending module (703) is configured to generate a device identification list, the device identification list recording a device identification of each communication device which sends a request message during a preset time period since a moment when the request message sent by the first communication device is received by the network access device; and send to the terminal for which a binding relationship is established with the network access device in advance the state switching request containing the device identification list.

11. The network access device according to claim 10, wherein the reply message contains a target device identification, the target device identification being a device identification selected from the device identification list by a user of the terminal, and the network access device further comprises:
a first connecting module (706) configured to connect a communication device corresponding to the target device identification to the network;
a second sending module (707) configured to send a response message to the communication device corresponding to the target device identification, the response message indicating that the communication device corresponding to the target device identification has been properly connected to the network.

12. The network access device according to any one of claims 10 to 11 wherein the network access device further comprises:
a judging module (708) configured to, if the network access device is currently in a device access permitting state, judge whether the first communication device is a device permitted by the network access device to access the network;
a second connecting module (709) configured to, if the first communication device is judged to be a device permitted by the network access device to access the network, connect the first communication device to the network; and
a third sending module (710) configured to send a response message to the first communication device, the response message indicating that the first communication device has been properly connected to the network.

13. The network access device according to claim 12, wherein the request message contains a type identification of the first communication device;
and the judging module (708) is configured to: judge whether the type of the first communication device is a type permitted by the network access device to access the network based on the type identification of the first communication device; and if the type of the first communication device is judged to be a type permitted by the network access device to access the network, determine that the first communication device is a device permitted by the network access device to access the network.

14. The network access device according to claim 12, wherein the request message contains an address of the first communication device;
and the judging module (708) is configured to: judge whether the address of the first communication device belongs to a range of addresses permitted by the network access device to access the network; and if the address of the first communication device is judged to be belong to the range of addresses permitted by the network access device to access the network, determine that the first communication device is a device permitted by the network access device to access the network.

15. The network access device according to any one of claims 10 to 14, wherein the switching module (705) is configured to switch the state of the network access device to a device access permitting state, and maintain the network access device in the device access permitting state during a preset time window.

16. A termina comprising:
a receiving module (810) configured to receive a state switching request sent by a network access device for which a binding relationship is established with the terminal in advance, wherein the state switching request contains a device identification of a first communication device;
a generating module (820) configured to generate a reply message based on the state switching request; and
a sending module (830) configured to send the reply message to the network access device, the reply message instructing if the network access device is to switch the state of the network access device from a device access forbidding state to a device access permitting state;
**characterized in that** the receiving module (810) is configured to receive a state switching request sent by the network access device for which a binding relationship is established with the terminal in advance, the state switching request containing a device identification list, and the device identification list recording a device identification of each communication device which sends a request message requesting for accessing the network to the network access device during a preset time period since a moment when the request message sent by the first communication device is received by the network access device; and **in that** the reply message contains a target device identification, the target device identification being a device identification selected from the device identification list by a user of the terminal.

17. The terminal according to claim 16, wherein the generating module (820) is configured to display the device identification list based on the state switching request; receive a trigger instruction generated by a user triggering a target device identification, the target device identification being a device identification selected from the device identification list by the user; and generate the reply message containing the target device identification based on the trigger instruction.

18. A system for accessing a network, comprising:
a network access device according to any one of claims 10-15; and
a first communication device comprising a broadcasting module (910) configured to broadcast a request message requesting for accessing the network to the network access device.

19. The system according to claim 18, wherein the system further comprises a terminal according to any one of claims 16-17.

20. A computer program including instructions for executing the steps of the method according to any one of claims 1 to 6, when said program is executed by a processor of a network access device.

21. A computer program including instructions for executing the steps of a method according to any one of claims 7 to 8, when said program is executed by a processor of a terminal.

22. A recording medium readable by a computer and having recorded thereon the computer program according to claim 20.

23. A recording medium readable by a computer and having recorded thereon the computer program according to claim 21.

## Patentansprüche

1. Verfahren zum Zugreifen auf ein Netzwerk, wobei das Verfahren durch eine Netzwerkzugriffsvorrichtung umgesetzt wird, wobei das Verfahren die Schritte umfasst des:
Empfangens (201, 502) einer Anforderungsnachricht, die Zugriff auf das Netzwerk anfordert, wobei die Anforderungsnachricht von einer ersten Kommunikationsvorrichtung übertragen wird, wobei die Anforderungsnachricht eine Vorrichtungsidentifikation der ersten Kommunikationsvorrichtung enthält,
Detektierens (202, 503) eines gegenwärtigen Zustands der Netzwerkzugriffsvorrichtung,
wenn sich die Netzwerkzugriffsvorrichtung gegenwärtig in einem Vorrichtungszugriffsverbotszustand befindet, Sendens (203, 504) einer Zustandswechselanforderung an ein Endgerät, für welches im Voraus eine Binding-Beziehung mit der Netzwerkzugriffsvorrichtung hergestellt wird, wobei die Zustandswechselanforderung die Vorrichtungsidentifikation der ersten Kommunikationsvorrichtung enthält,
Empfangens (204, 508) einer Antwortnachricht, die durch das Endgerät gesendet wird, wobei die Antwortnachricht durch das Endgerät auf der Grundlage der Zustandswechselanforderung erzeugt wird und eine Zielvorrichtungsidentifikation enthält, wobei es sich bei der Zielvorrichtungsidentifikation um eine Vorrichtungsidentifikation handelt, die durch einen Benutzer des Endgeräts aus der Vorrichtungsidentifikationsliste ausgewählt wird, und
wenn die Antwortnachricht ein Wechseln des Zustands der Netzwerkzugriffsvorrichtung in einen Vorrichtungszugriffserlaubniszustand anweist, Wechselns (205, 509) des Zustands der Netzwerkzugriffsvorrichtung in einen Vorrichtungszugriffserlaubniszustand,
**dadurch gekennzeichnet, dass** der Schritt (203, 504) des Sendens einer Zustandswechselanforderung an ein Endgerät, für welches im Voraus eine Binding-Beziehung mit der Netzwerkzugriffsvorrichtung hergestellt wird, die Schritte umfasst des:
Erzeugens (5041) einer Vorrichtungsidentifikationsliste, wobei die Vorrichtungsidentifikationsliste eine Vorrichtungsidentifikation jeder Kommunikationsvorrichtung aufzeichnet, die während eines voreingestellten Zeitraums seit einem Moment, wenn die Anforderungsnachricht, die durch die erste Kommunikationsvorrichtung gesendet wird, durch die Netzwerkzugriffsvorrichtung empfangen wird, eine Anforderungsnachricht sendet, und
Sendens (5042), an das Endgerät, für welches im Voraus eine Binding-Beziehung mit der Netzwerkzugriffsvorrichtung hergestellt wird, der Zustandswechselanforderung, welche die Vorrichtungsidentifikationsliste enthält.

2. Verfahren nach Anspruch 1, wobei die Antwortnachricht eine Zielvorrichtungsidentifikation enthält, wobei es sich bei der Zielvorrichtungsidentifikation um eine Vorrichtungsidentifikation handelt, die durch einen Benutzer des Endgeräts aus der Vorrichtungsidentifikationsliste ausgewählt wird, und das Verfahren ferner die Schritte umfasst des:
Verbindens (510) einer Kommunikationsvorrichtung, die der Zielvorrichtungsidentifikation entspricht, mit dem Netzwerk, und
Sendens (511) einer Rückmeldenachricht an die Kommunikationsvorrichtung, die der Zielvorrichtungsidentifikation entspricht, wobei die Rückmeldenachricht angibt, dass die Kommunikationsvorrichtung, die der Zielvorrichtungsidentifikation entspricht, ordnungsgemäß mit dem Netzwerk verbunden worden ist.

3. Verfahren nach einem der Ansprüche 1 bis 2, wobei das Verfahren ferner die Schritte umfasst des:
wenn sich die Netzwerkzugriffsvorrichtung gegenwärtig in einem Vorrichtungszugriffserlaubniszustand befindet, Beurteilens (512), ob es sich bei der ersten Kommunikationsvorrichtung um eine Vorrichtung handelt, welcher die Netzwerkzugriffsvorrichtung Zugriff auf das Netzwerk erlaubt hat,
wenn die erste Kommunikationsvorrichtung dahingehend beurteilt wurde, dass es sich um eine Vorrichtung handelt, welcher die Netzwerkzugriffsvorrichtung Zugriff auf das Netzwerk erlaubt hat, Verbindens (513) der ersten Kommunikationsvorrichtung mit dem Netzwerk, und
Sendens (514) einer Rückmeldenachricht an die erste Kommunikationsvorrichtung, wobei die Rückmeldenachricht angibt, dass die erste Kommunikationsvorrichtung ordnungsgemäß mit dem Netzwerk verbunden worden ist.

4. Verfahren nach Anspruch 3, wobei die Anforderungsnachricht eine Typidentifikation der ersten Kommunikationsvorrichtung enthält, und wobei der Schritt des Beurteilens (512), ob es sich bei der ersten Kommunikationsvorrichtung um eine Vorrichtung handelt, welcher die Netzwerkzugriffsvorrichtung Zugriff auf das Netzwerk erlaubt hat, die Schritte umfasst des:
Beurteilens (5121a), ob es sich bei dem Typ der ersten Kommunikationsvorrichtung um einen Typ handelt, welchem die Netzwerkzugriffsvorrichtung Zugriff auf das Netzwerk erlaubt hat, auf der Grundlage der Typidentifikation der ersten Kommunikationsvorrichtung, und
wenn es sich bei dem Typ der ersten Kommunikationsvorrichtung der Beurteilung nach um einen Typ handelt, welchem die Netzwerkzugriffsvorrichtung Zugriff auf das Netzwerk erlaubt hat, Bestimmens (5121b), dass es sich bei der ersten Kommunikationsvorrichtung um eine Vorrichtung handelt, welcher die Netzwerkzugriffsvorrichtung Zugriff auf das Netzwerk erlaubt hat.

5. Verfahren nach Anspruch 3, wobei die Anforderungsnachricht eine Adresse der ersten Kommunikationsvorrichtung enthält, und wobei der Schritt des Beurteilens (512), ob es sich bei der ersten Kommunikationsvorrichtung um eine Vorrichtung handelt, welcher die Netzwerkzugriffsvorrichtung Zugriff auf das Netzwerk erlaubt hat, die Schritte umfasst des:
Beurteilens (5122a), ob die Adresse der ersten Kommunikationsvorrichtung zu einem Adressbereich gehört, welchem die Netzwerkzugriffsvorrichtung Zugriff auf das Netzwerk erlaubt hat, und
wenn die Adresse der ersten Kommunikationsvorrichtung der Beurteilung nach zu dem Adressbereich gehört, welchem die Netzwerkzugriffsvorrichtung Zugriff auf das Netzwerk erlaubt hat, Bestimmens (5122b), dass es sich bei der ersten Kommunikationsvorrichtung um eine Vorrichtung handelt, welcher die Netzwerkzugriffsvorrichtung Zugriff auf das Netzwerk erlaubt hat.

6. Verfahren nach einem der Ansprüche 1 bis 5, wobei der Schritt des Wechselns (205, 509) des Zustands der Netzwerkzugriffsvorrichtung in einen Vorrichtungszugriffserlaubniszustand die Schritte umfasst des:
Wechselns (5091) des Zustands der Netzwerkzugriffsvorrichtung in einen Vorrichtungszugriffserlaubniszustand und Halten der Netzwerkzugriffsvorrichtung in dem Vorrichtungszugriffserlaubniszustand während eines voreingestellten Zeitfensters.

7. Verfahren zum Zugreifen auf ein Netzwerk, wobei das Verfahren durch ein Endgerät umgesetzt wird und die Schritte umfasst des:
Empfangens (301, 505) einer Zustandswechselanforderung, die durch eine Netzwerkzugriffsvorrichtung gesendet wird, für welche im Voraus eine Binding-Beziehung mit dem Endgerät hergestellt wird, wobei die Zustandswechselanforderung eine Vorrichtungsidentifikation einer ersten Kommunikationsvorrichtung enthält,
Erzeugens (302, 506) einer Antwortnachricht auf der Grundlage der Zustandswechselanforderung, und
Sendens (303, 507) der Antwortnachricht an die Netzwerkzugriffsvorrichtung, wobei die Antwortnachricht anweist, wenn die Netzwerkzugriffsvorrichtung den Zustand der Netzwerkzugriffsvorrichtung von einem Vorrichtungszugriffsverbotszustand in einen Vorrichtungszugriffserlaubniszustand wechseln soll,
**dadurch gekennzeichnet, dass** der Schritt des Empfangens (301, 505) einer Zustandswechselanforderung, die durch eine Netzwerkzugriffsvorrichtung gesendet wird, für welche im Voraus eine Binding-Beziehung mit dem Endgerät hergestellt wird, einen Schritt umfasst des:
Empfangens (5051) einer Zustandswechselanforderung, die durch die Netzwerkzugriffsvorrichtung gesendet wird, für welche im Voraus eine Binding-Beziehung mit dem Endgerät hergestellt wird, wobei die Zustandswechselanforderung eine Vorrichtungsidentifikationsliste enthält und die Vorrichtungsidentifikationsliste eine Vorrichtungsidentifikation jeder Kommunikationsvorrichtung aufzeichnet, die während eines voreingestellten Zeitraums seit einem Moment, wenn die Anforderungsnachricht, die durch die erste Kommunikationsvorrichtung gesendet wird, durch die Netzwerkzugriffsvorrichtung empfangen wird, eine Anforderungsnachricht, die das Netzwerk anfordert, an die Netzwerkzugriffsvorrichtung sendet, und dadurch, dass die Antwortnachricht eine Zielvorrichtungsidentifikation enthält, wobei es sich bei der Zielvorrichtungsidentifikation um eine Vorrichtungsidentifikation handelt, die durch einen Benutzer des Endgeräts aus der Vorrichtungsidentifikationsliste ausgewählt wird.

8. Verfahren nach Anspruch 7, wobei der Schritt des Erzeugens (302, 506) einer Antwortnachricht auf der Grundlage der Zustandswechselanforderung die Schritte umfasst des:
Anzeigens (5061) der Vorrichtungsidentifikationsliste auf der Grundlage der Zustandswechselanforderung,
Empfangens (5062) einer Auslöseanweisung, die durch einen Benutzer erzeugt wird, der eine Zielvorrichtungsidentifikation auslöst, wobei es sich bei der Zielvorrichtungsidentifikation um eine Vorrichtungsidentifikation handelt, die durch den Benutzer aus der Vorrichtungsidentifikationsliste ausgewählt wird, und
Erzeugens (5063) der Antwortnachricht, welche die Zielvorrichtungsidentifikation enthält, auf der Grundlage der Auslöseanweisung.

9. Verfahren zum Zugreifen auf ein Netzwerk, wobei das Verfahren durch eine erste Kommunikationsvorrichtung und eine Netzwerkzugriffsvorrichtung umgesetzt wird und umfassend:
einen Schritt des Übertragens (401, 501) durch die erste Kommunikationsvorrichtung einer Anforderungsnachricht, die Zugriff auf das Netzwerk anfordert, an die Netzwerkzugriffsvorrichtung, und
die Schritte eines Verfahrens nach einem der Ansprüche 1-6, die durch die Netzwerkzugriffsvorrichtung umgesetzt werden.

10. Netzwerkzugriffsvorrichtung, umfassend:
ein erstes Empfangsmodul (610, 701), das dazu ausgestaltet ist, eine Anforderungsnachricht zu empfangen, die Zugriff auf das Netzwerk anfordert und die durch eine erste Kommunikationsvorrichtung übertragen wird, wobei die Anforderungsnachricht eine Vorrichtungsidentifikation der ersten Kommunikationsvorrichtung enthält,
ein Detektionsmodul (620, 702), das dazu ausgestaltet ist, einen gegenwärtigen Zustand der Netzwerkzugriffsvorrichtung zu detektieren,
ein erstes Sendemodul (630, 703), das dazu ausgestaltet ist, wenn sich die Netzwerkzugriffsvorrichtung gegenwärtig in einem Vorrichtungszugriffverbotszustand befindet, eine Zustandswechselanforderung an ein Endgerät zu senden, für welches im Voraus eine Binding-Beziehung mit der Netzwerkzugriffsvorrichtung hergestellt wird, wobei die Zustandswechselanforderung die Vorrichtungsidentifikation der ersten Kommunikationsvorrichtung enthält,
ein zweites Empfangsmodul (640, 704), das dazu ausgestaltet ist, eine Antwortnachricht zu empfangen, die durch das Endgerät gesendet wird, wobei die Antwortnachricht durch das Endgerät auf der Grundlage der Zustandswechselanforderung erzeugt wird und eine Zielvorrichtungsidentifikation enthält, wobei es sich bei der Zielvorrichtungsidentifikation um eine Vorrichtungsidentifikation handelt, die durch einen Benutzer des Endgeräts aus der Vorrichtungsidentifikationsliste ausgewählt wird, und
ein Wechselmodul (650, 705), das dazu ausgestaltet ist, wenn die Antwortnachricht ein Wechseln des Zustands der Netzwerkzugriffsvorrichtung in einen Vorrichtungszugriffserlaubniszustand anweist, den Zustand der Netzwerkzugriffsvorrichtung in einen Vorrichtungszugriffserlaubniszustand zu wechseln,
**dadurch gekennzeichnet, dass** das erste Sendemodul (703) dazu ausgestaltet ist, eine Vorrichtungsidentifikationsliste zu erzeugen, wobei die Vorrichtungsidentifikationsliste eine Vorrichtungsidentifikation jeder Kommunikationsvorrichtung aufzeichnet, die während eines voreingestellten Zeitraums seit einem Moment, wenn die Anforderungsnachricht, die durch die erste Kommunikationsvorrichtung gesendet wird, durch die Netzwerkzugriffsvorrichtung empfangen wird, eine Anforderungsnachricht sendet, und an das Endgerät, für welches im Voraus eine Binding-Beziehung mit der Netzwerkzugriffsvorrichtung hergestellt wird, die Zustandswechselanforderung zu senden, welche die Vorrichtungsidentifikationsliste enthält.

11. Netzwerkzugriffsvorrichtung nach Anspruch 10, wobei die Antwortnachricht eine Zielvorrichtungsidentifikation enthält, wobei es sich bei der Zielvorrichtungsidentifikation um eine Vorrichtungsidentifikation handelt, die durch einen Benutzer des Endgeräts aus der Vorrichtungsidentifikationsliste ausgewählt wird, und die Netzwerkzugriffsvorrichtung ferner umfasst:
ein erstes Verbindungsmodul (706), das dazu ausgestaltet ist, eine Kommunikationsvorrichtung, die der Zielvorrichtungsidentifikation entspricht, mit dem Netzwerk zu verbinden,
ein zweites Sendemodul (707), das dazu ausgestaltet ist, eine Rückmeldenachricht an die Kommunikationsvorrichtung zu senden, die der Zielvorrichtungsidentifikation entspricht, wobei die Rückmeldenachricht angibt, dass die Kommunikationsvorrichtung, die der Zielvorrichtungsidentifikation entspricht, ordnungsgemäß mit dem Netzwerk verbunden worden ist.

12. Netzwerkzugriffsvorrichtung nach einem der Ansprüche 10 bis 11, wobei die Netzwerkzugriffsvorrichtung ferner umfasst:
ein Beurteilungsmodul (708), das dazu ausgestaltet ist, wenn sich die Netzwerkzugriffsvorrichtung gegenwärtig in einem Vorrichtungszugriffserlaubniszustand befindet, zu beurteilen, ob es sich bei der ersten Kommunikationsvorrichtung um eine Vorrichtung handelt, welcher die Netzwerkzugriffsvorrichtung Zugriff auf das Netzwerk erlaubt hat,
ein zweites Verbindungsmodul (709), das dazu ausgestaltet ist, wenn es sich bei der ersten Kommunikationsvorrichtung der Beurteilung nach um eine Vorrichtung handelt, welcher die Netzwerkzugriffsvorrichtung Zugriff auf das Netzwerk erlaubt hat, die erste Kommunikationsvorrichtung mit dem Netzwerk zu verbinden, und
ein drittes Sendemodul (710), das dazu ausgestaltet ist, eine Rückmeldenachricht an die erste Kommunikationsvorrichtung zu senden, wobei die Rückmeldenachricht angibt, dass die erste Kommunikationsvorrichtung ordnungsgemäß mit dem Netzwerk verbunden worden ist.

13. Netzwerkzugriffsvorrichtung nach Anspruch 12, wobei die Anforderungsnachricht eine Typidentifikation der ersten Kommunikationsvorrichtung enthält, und
das Beurteilungsmodul (708) ausgestaltet ist, um: auf der Grundlage der Typidentifikation der ersten Kommunikationsvorrichtung zu beurteilen, ob es sich bei dem Typ der ersten Kommunikationsvorrichtung um einen Typ handelt, welchem die Netzwerkzugriffsvorrichtung Zugriff auf das Netzwerk erlaubt hat, und wenn es sich bei dem Typ der ersten Kommunikationsvorrichtung der Beurteilung nach um einen Typ handelt, welchem die Netzwerkzugriffsvorrichtung Zugriff auf das Netzwerk erlaubt hat, zu bestimmen, dass es sich bei der ersten Kommunikationsvorrichtung um eine Vorrichtung handelt, welcher die Netzwerkzugriffsvorrichtung Zugriff auf das Netzwerk erlaubt hat.

14. Netzwerkzugriffsvorrichtung nach Anspruch 12, wobei
die Anforderungsnachricht eine Adresse der ersten Kommunikationsvorrichtung enthält, und
das Beurteilungsmodul (708) ausgestaltet ist, um: zu beurteilen, ob die Adresse der ersten Kommunikationsvorrichtung zu einem Adressbereich gehört, welchem die Netzwerkzugriffsvorrichtung Zugriff auf das Netzwerk erlaubt hat, und wenn die Adresse der ersten Kommunikationsvorrichtung der Beurteilung nach zu dem Adressbereich gehört, welchem die Netzwerkzugriffsvorrichtung Zugriff auf das Netzwerk erlaubt hat, zu bestimmen, dass es sich bei der ersten Kommunikationsvorrichtung um eine Vorrichtung handelt, welcher die Netzwerkzugriffsvorrichtung Zugriff auf das Netzwerk erlaubt hat.

15. Netzwerkzugriffsvorrichtung nach einem der Ansprüche 10 bis 14, wobei
das Wechselmodul (705) dazu ausgestaltet ist, den Zustand der Netzwerkzugriffsvorrichtung in einen Vorrichtungszugriffserlaubniszustand zu wechseln und die Netzwerkzugriffsvorrichtung während eines voreingestellten Zeitfensters in dem Vorrichtungszugriffserlaubniszustand zu halten.

16. Endgerät, umfassend:
ein Empfangsmodul (810), das dazu ausgestaltet ist, eine Zustandswechselanforderung zu empfangen, die durch eine Netzwerkzugriffsvorrichtung gesendet wird, für welche im Voraus eine Binding-Beziehung mit dem Endgerät hergestellt wird, wobei die Zustandswechselanforderung eine Vorrichtungsidentifikation einer ersten Kommunikationsvorrichtung enthält,
ein Erzeugungsmodul (820), das dazu ausgestaltet ist, eine Antwortnachricht auf der Grundlage der Zustandswechselanforderung zu erzeugen, und
ein Sendemodul (830), das dazu ausgestaltet ist, die Antwortnachricht an die Netzwerkzugriffsvorrichtung zu senden, wobei die Antwortnachricht anweist, wenn die Netzwerkzugriffsvorrichtung den Zustand der Netzwerkzugriffsvorrichtung von einem Vorrichtungszugriffsverbotszustand in einen Vorrichtungszugriffserlaubniszustand wechseln soll,
**dadurch gekennzeichnet, dass** das Empfangsmodul (810) dazu ausgestaltet ist, eine Zustandswechselanforderung zu empfangen, die durch die Netzwerkzugriffsvorrichtung gesendet wird, für welche im Voraus eine Binding-Beziehung mit dem Endgerät hergestellt wird, wobei die Zustandswechselanforderung eine Vorrichtungsidentifikationsliste enthält und die Vorrichtungsidentifikationsliste eine Vorrichtungsidentifikation jeder Kommunikationsvorrichtung aufzeichnet, die während eines voreingestellten Zeitraums seit einem Moment, wenn die Anforderungsnachricht, die durch die erste Kommunikationsvorrichtung gesendet wird, durch die Netzwerkzugriffsvorrichtung empfangen wird, eine Anforderungsnachricht, die Zugriff auf das Netzwerk anfordert, an die Netzwerkzugriffsvorrichtung sendet, und dadurch, dass die Antwortnachricht eine Zielvorrichtungsidentifikation enthält, wobei es sich bei der Zielvorrichtungsidentifikation um eine Vorrichtungsidentifikation handelt, die durch einen Benutzer des Endgeräts aus der Vorrichtungsidentifikationsliste ausgewählt wird.

17. Endgerät nach Anspruch 16, wobei das Erzeugungsmodul (820) dazu ausgestaltet ist, die Vorrichtungsidentifikationsliste auf der Grundlage der Zustandswechselanforderung anzuzeigen, eine Auslöseanweisung zu empfangen, die durch einen Benutzer erzeugt wird, der eine Zielvorrichtungsidentifikation auslöst, wobei es sich bei der Zielvorrichtungsidentifikation um eine Vorrichtungsidentifikation handelt, die durch den Benutzer aus der Vorrichtungsidentifikationsliste ausgewählt wird, und die Antwortnachricht, welche die Zielvorrichtungsidentifikation enthält, auf der Grundlage der Auslöseanweisung zu erzeugen.

18. System zum Zugreifen auf ein Netzwerk, umfassend:
eine Netzwerkzugriffsvorrichtung nach einem der Ansprüche 10-15, und
eine erste Kommunikationsvorrichtung, die ein Übertragungsmodul (910) umfasst, das dazu ausgestaltet ist, eine Anforderungsnachricht, die Zugriff auf das Netzwerk anfordert, an die Netzwerkzugriffsvorrichtung zu übertragen.

19. System nach Anspruch 18, wobei das System ferner ein Endgerät nach einem der Ansprüche 16-17 umfasst.

20. Computerprogramm, das Anweisungen zum Ausführen der Schritte eines Verfahrens nach einem der Ansprüche 1 bis 6 beinhaltet, wenn das Programm durch einen Prozessor einer Netzwerkzugriffsvorrichtung ausgeführt wird.

21. Computerprogramm, das Anweisungen zum Ausführen der Schritte eines Verfahrens nach einem der Ansprüche 7 bis 8 beinhaltet, wenn das Programm durch einen Prozessor eines Endgeräts ausgeführt wird.

22. Aufzeichnungsmedium, das durch einen Computer gelesen werden kann und auf dem das Computerprogramm nach Anspruch 20 aufgezeichnet ist.

23. Aufzeichnungsmedium, das durch einen Computer gelesen werden kann und auf dem das Computerprogramm nach Anspruch 21 aufgezeichnet ist.

## Revendications

1. Procédé pour accéder à un réseau, ledit procédé étant mis en oeuvre par un dispositif d'accès au réseau, le procédé comprenant des étapes consistant à :
recevoir (201, 502) un message de demande demandant l'accès au réseau, où le message de demande est diffusé par un premier dispositif de communication, où le message de demande contient une identification de dispositif du premier dispositif de communication ;
détecter (202, 503) un état actuel du dispositif d'accès au réseau ;
si le dispositif d'accès au réseau est actuellement dans un état d'interdiction d'accès de dispositif, envoyer (203, 504) une demande de commutation d'état à un terminal pour lequel une relation de liaison est établie avec le dispositif d'accès au réseau à l'avance, où la demande de commutation d'état contient l'identification de dispositif du premier dispositif de communication ;
recevoir (204, 508) un message de réponse envoyé par le terminal, le message de réponse étant généré par le terminal sur la base de la demande de commutation d'état et contenant une identification de dispositif cible, l'identification de dispositif cible étant une identification de dispositif sélectionnée dans la liste d'identification de dispositif par un utilisateur du terminal ; et
si le message de réponse donne pour instruction de commuter l'état du dispositif d'accès au réseau à un état d'autorisation d'accès de dispositif, commuter (205, 509) l'état du dispositif d'accès au réseau à un état d'autorisation d'accès de dispositif ;
**caractérisé en ce que** l'étape (203, 504) consistant à envoyer une demande de commutation d'état à un terminal pour lequel une relation de liaison est établie avec le dispositif d'accès au réseau à l'avance comprend des étapes consistant à :
générer (5041) une liste d'identification de dispositif, la liste d'identification de dispositif enregistrant une identification de dispositif de chaque dispositif de communication qui envoie un message de demande pendant une période de temps prédéfinie depuis un moment où le message de demande envoyé par le premier dispositif de communication est reçu par le dispositif d'accès au réseau ; et
envoyer (5042), au terminal pour lequel une relation de liaison est établie avec le dispositif d'accès au réseau à l'avance, la demande de commutation d'état contenant la liste d'identification de dispositif.

2. Procédé selon la revendication 1, dans lequel le message de réponse contient une identification de dispositif cible, l'identification de dispositif cible étant une identification de dispositif sélectionnée dans la liste d'identification de dispositif par un utilisateur du terminal, et le procédé comprend en outre des étapes consistant à :
connecter (510) un dispositif de communication correspondant à l'identification de dispositif cible au réseau ; et
envoyer (511) un message de réponse au dispositif de communication correspondant à l'identification de dispositif cible, le message de réponse indiquant que le dispositif de communication correspondant à l'identification de dispositif cible a été connecté correctement au réseau.

3. Procédé selon l'une quelconque des revendications 1 à 2, dans lequel le procédé comprend en outre les étapes consistant à :
si le dispositif d'accès au réseau est actuellement dans un état d'autorisation d'accès de dispositif, juger (512) si le premier dispositif de communication est un dispositif autorisé par le dispositif d'accès au réseau à accéder au réseau ;
si le premier dispositif de communication est jugé être un dispositif autorisé par le dispositif d'accès au réseau à accéder au réseau, connecter (513) le premier dispositif de communication au réseau ; et
envoyer (514) un message de réponse au premier dispositif de communication, le message de réponse indiquant que le premier dispositif de communication a été connecté correctement au réseau.

4. Procédé selon la revendication 3, dans lequel le message de demande contient une identification de type du premier dispositif de communication ; et dans lequel l'étape consistant à juger (512) si le premier dispositif de communication est un dispositif autorisé par le dispositif d'accès au réseau à accéder au réseau comprend les étapes consistant à :
juger (5121a) si le type du premier dispositif de communication est un type autorisé par le dispositif d'accès au réseau à accéder au réseau sur la base de l'identification de type du premier dispositif de communication ; et
si le type du premier dispositif de communication est jugé être un type autorisé par le dispositif d'accès au réseau à accéder au réseau, déterminer (5121b) que le premier dispositif de communication est un dispositif autorisé par le dispositif d'accès au réseau à accéder au réseau.

5. Procédé selon la revendication 3, dans lequel le message de demande contient une adresse du premier dispositif de communication ; et dans lequel l'étape consistant à juger (512) si le premier dispositif de communication est un dispositif autorisé par le dispositif d'accès au réseau à accéder au réseau comprend des étapes consistant à :
juger (5122a) si l'adresse du premier dispositif de communication appartient à une plage d'adresses autorisée par le dispositif d'accès au réseau à accéder au réseau ; et
si l'adresse du premier dispositif de communication est jugée appartenir à la plage d'adresses autorisée par le dispositif d'accès au réseau à accéder au réseau, déterminer (5122b) que le premier dispositif de communication est un dispositif autorisé par le dispositif d'accès au réseau à accéder au réseau.

6. Procédé selon l'une quelconque des revendications 1 à 5, dans lequel l'étape consistant à commuter (205, 509) l'état du dispositif d'accès au réseau à un état d'autorisation d'accès de dispositif comprend des étapes consistant à :
commuter (5091) l'état du dispositif d'accès au réseau à un état d'autorisation d'accès de dispositif, et maintenir le dispositif d'accès au réseau dans l'état d'autorisation d'accès de dispositif pendant une fenêtre de temps prédéfinie.

7. Procédé pour accéder à un réseau, ledit procédé étant mis en oeuvre par un terminal et comprenant les étapes consistant à :
recevoir (301, 505) une demande de commutation d'état envoyée par un dispositif d'accès au réseau pour lequel une relation de liaison est établie avec le terminal à l'avance, où la demande de commutation d'état contient une identification de dispositif d'un premier dispositif de communication ;
générer (302, 506) un message de réponse sur la base de la demande de commutation d'état ; et
envoyer (303, 507) le message de réponse au dispositif d'accès au réseau, le message de réponse donnant pour instruction si le dispositif d'accès au réseau doit commuter l'état du dispositif d'accès au réseau d'un état d'interdiction d'accès de dispositif à un état d'autorisation d'accès de dispositif ;
**caractérisé en ce que** l'étape consistant à recevoir (301, 505) une demande de de commutation d'état envoyée par un dispositif d'accès au réseau pour lequel une relation de liaison est établie avec le terminal à l'avance, comprend une étape consistant à :
recevoir (5051) une demande de commutation d'état envoyée par le dispositif d'accès au réseau pour lequel une relation de liaison est établie avec le terminal à l'avance, la demande de commutation d'état contenant une liste d'identification de dispositif, et la liste d'identification de dispositif enregistrant une identification de dispositif de chaque dispositif de communication qui envoie un message de demande demandant le réseau au dispositif d'accès au réseau pendant une période de temps prédéfinie depuis un moment où le message de demande envoyé par le premier dispositif de communication est reçu par le dispositif d'accès au réseau ; et **en ce que** le message de réponse contient une identification de dispositif cible, l'identification de dispositif cible étant une identification de dispositif sélectionnée dans la liste d'identification de dispositif par un utilisateur du terminal.

8. Procédé selon la revendication 7, dans lequel l'étape consistant à générer (302, 506) un message de réponse sur la base de la demande de commutation d'état comprend les étapes consistant à :
afficher (5061) la liste d'identification de dispositif sur la base de la demande de commutation d'état ;
recevoir (5062) une instruction de déclenchement générée par un utilisateur déclenchant une identification de dispositif cible, l'identification de dispositif cible étant une identification de dispositif sélectionnée dans la liste d'identification de dispositif par l'utilisateur ; et
générer (5063) le message de réponse contenant l'identification de dispositif cible sur la base de l'instruction de déclenchement.

9. Procédé pour accéder à un réseau, ledit procédé étant mis en oeuvre par un premier dispositif de communication et un dispositif d'accès au réseau et comprenant :
une étape consistant à diffuser (401, 501) par le premier dispositif de communication un message de demande demandant l'accès au réseau au dispositif d'accès au réseau ; et
les étapes d'un procédé selon l'une quelconque des revendications 1 à 6 mis en oeuvre par le dispositif d'accès au réseau.

10. Dispositif d'accès au réseau comprenant :
un premier module de réception (610, 701) configuré pour recevoir un message de demande demandant l'accès au réseau qui est diffusé par un premier dispositif de communication, où le message de demande contient une identification de dispositif du premier dispositif de communication ;
un module de détection (620, 702) configuré pour détecter un état actuel du dispositif d'accès au réseau ;
un premier module d'envoi (630, 703) configuré pour, si le dispositif d'accès au réseau est actuellement dans un état d'interdiction d'accès de dispositif, envoyer une demande de commutation d'état à un terminal pour lequel une relation de liaison est établie avec le dispositif d'accès au réseau à l'avance, où la demande de commutation d'état contient l'identification de dispositif du premier dispositif de communication ;
un second module de réception (640, 704) configuré pour recevoir un message de réponse envoyé par le terminal, le message de réponse étant généré par le terminal sur la base de la demande de commutation d'état et contenant une identification de dispositif cible, l'identification de dispositif cible étant une identification de dispositif sélectionnée dans la liste d'identification de dispositif par un utilisateur du terminal ; et
un module de commutation (650, 705) configuré pour, si le message de réponse donne pour instruction de commuter l'état du dispositif d'accès au réseau à un état d'autorisation d'accès de dispositif, commuter l'état du dispositif d'accès au réseau à un état d'autorisation d'accès de dispositif ;
**caractérisé en ce que** le premier module d'envoi (703) est configuré pour générer une liste d'identification de dispositif, la liste d'identification de dispositif enregistrant une identification de dispositif de chaque dispositif de communication qui envoie un message de demande pendant une période de temps prédéfinie depuis un moment où le message de demande envoyé par le premier dispositif de communication est reçu par le dispositif d'accès au réseau ; et envoyer au terminal pour lequel une relation de liaison est établie avec le dispositif d'accès au réseau à l'avance la demande de commutation d'état contenant la liste d'identification de dispositif.

11. Dispositif d'accès au réseau selon la revendication 10, dans lequel le message de réponse contient une identification de dispositif cible, l'identification de dispositif cible étant une identification de dispositif sélectionnée dans la liste d'identification de dispositif par un utilisateur du terminal, et le dispositif d'accès au réseau comprend en outre :
un premier module de connexion (706) configuré pour connecter un dispositif de communication correspondant à l'identification de dispositif cible au réseau ;
un deuxième module d'envoi (707) configuré pour envoyer un message de réponse au dispositif de communication correspondant à l'identification de dispositif cible, le message de réponse indiquant que le dispositif de communication correspondant à l'identification de dispositif cible a été connecté correctement au réseau.

12. Dispositif d'accès au réseau selon l'une quelconque des revendications 10 à 11, dans lequel le dispositif d'accès au réseau comprend en outre :
un module de jugement (708) configuré pour, si le dispositif d'accès au réseau est actuellement dans un état d'autorisation d'accès de dispositif, juger si le premier dispositif de communication est un dispositif autorisé par le dispositif d'accès au réseau à accéder au réseau ;
un second module de connexion (709) configuré pour, si le premier dispositif de communication est jugé être un dispositif autorisé par le dispositif d'accès au réseau à accéder au réseau, connecter le premier dispositif de communication au réseau ; et
un troisième module d'envoi (710) configuré pour envoyer un message de réponse au premier dispositif de communication, le message de réponse indiquant que le premier dispositif de communication a été connecté correctement au réseau.

13. Dispositif d'accès au réseau selon la revendication 12, dans lequel le message de demande contient une identification de type du premier dispositif de communication ; et
le module de jugement (708) est configuré pour : juger si le type du premier dispositif de communication est un type autorisé par le dispositif d'accès au réseau à accéder au réseau sur la base de l'identification de type du premier dispositif de communication ; et si le type du premier dispositif de communication est jugé être un type autorisé par le dispositif d'accès au réseau à accéder au réseau, déterminer que le premier dispositif de communication est un dispositif autorisé par le dispositif d'accès au réseau à accéder au réseau.

14. Dispositif d'accès au réseau selon la revendication 12, dans lequel le message de demande contient une adresse du premier dispositif de communication ; et
le module de jugement (708) est configuré pour : juger si l'adresse du premier dispositif de communication appartient à une plage d'adresses autorisée par le dispositif d'accès au réseau à accéder au réseau ; et si l'adresse du premier dispositif de communication est jugée appartenir à la plage d'adresses autorisée par le dispositif d'accès au réseau à accéder au réseau, déterminer que le premier dispositif de communication est un dispositif autorisé par le dispositif d'accès au réseau à accéder au réseau.

15. Dispositif d'accès au réseau selon l'une quelconque des revendications 10 à 14, dans lequel
le module de commutation (705) est configuré pour commuter l'état du dispositif d'accès au réseau à un état d'autorisation d'accès de dispositif, et maintenir le dispositif d'accès au réseau dans l'état d'autorisation d'accès de dispositif pendant une fenêtre de temps prédéfinie.

16. Terminal comprenant :
un module de réception (810) configuré pour recevoir une demande de commutation d'état envoyée par un dispositif d'accès au réseau pour lequel une relation de liaison est établie avec le terminal à l'avance, où la demande de commutation d'état contient une identification de dispositif d'un premier dispositif de communication ;
un module de génération (820) configuré pour générer un message de réponse sur la base de la demande de commutation d'état ; et
un module d'envoi (830) configuré pour envoyer le message de réponse au dispositif d'accès au réseau, le message de réponse donnant pour instruction si le dispositif d'accès au réseau doit commuter l'état du dispositif d'accès au réseau d'un état d'interdiction d'accès de dispositif à un état d'autorisation d'accès de dispositif ;
**caractérisé en ce que** le module de réception (810) est configuré pour recevoir une demande de commutation d'état envoyée par le dispositif d'accès au réseau pour lequel une relation de liaison est établie avec le terminal à l'avance, la demande de commutation d'état contenant une liste d'identification de dispositif, et la liste d'identification de dispositif enregistrant une identification de dispositif de chaque dispositif de communication qui envoie un message de demande demandant l'accès au réseau au dispositif d'accès au réseau pendant une période de temps prédéfinie depuis un moment où le message de demande envoyé par le premier dispositif de communication est reçu par le dispositif d'accès au réseau ; et **en ce que** le message de réponse contient une identification de dispositif cible, l'identification de dispositif cible étant une identification de dispositif sélectionnée dans la liste d'identification de dispositif par un utilisateur du terminal.

17. Terminal selon la revendication 16, dans lequel
le module de génération (820) est configuré pour afficher la liste d'identification de dispositif sur la base de la demande de commutation d'état ; recevoir une instruction de déclenchement générée par un utilisateur déclenchant une identification de dispositif cible, l'identification de dispositif cible étant une identification de dispositif sélectionnée dans la liste d'identification de dispositif par l'utilisateur ; et générer le message de réponse contenant l'identification de dispositif cible sur la base de l'instruction de déclenchement.

18. Système pour accéder à un réseau, comprenant :
un dispositif d'accès au réseau selon l'une quelconque des revendications 10 à 15 ; et
un premier dispositif de communication comprenant un module de diffusion (910) configuré pour diffuser un message de demande demandant l'accès au réseau au dispositif d'accès au réseau.

19. Système selon la revendication 18, dans lequel le système comprend en outre un terminal selon l'une quelconque des revendications 16-17.

20. Programme informatique incluant des instructions pour exécuter les étapes du procédé selon l'une quelconque des revendications 1 à 6, lorsque ledit programme est exécuté par un processeur d'un dispositif d'accès au réseau.

21. Programme informatique incluant des instructions pour exécuter les étapes d'un procédé selon l'une quelconque des revendications 7 à 8, lorsque ledit programme est exécuté par un processeur d'un terminal.

22. Support d'enregistrement lisible par un ordinateur et sur lequel est enregistré le programme informatique selon la revendication 20.

23. Support d'enregistrement lisible par un ordinateur et sur lequel est enregistré le programme informatique selon la revendication 21.
